(19) **Europäisches Patentamt / European Patent Office / Office européen des brevets**

(11) **EP 4 435 468 B1**

(12) # EUROPEAN PATENT SPECIFICATION

(45) Date of publication and mention of the grant of the patent:
**29.04.2026 Bulletin 2026/18**

(21) Application number: **24162683.7**

(22) Date of filing: **11.03.2024**

(51) International Patent Classification (IPC):
**G01S 7/4863** (2020.01)     **G01S 7/4865** (2020.01)
**G01S 17/86** (2020.01)     **G01S 17/88** (2006.01)
**G01S 17/894** (2020.01)     **G06T 7/10** (2017.01)

(52) Cooperative Patent Classification (CPC):
**G01S 7/4865; G01S 7/4863; G01S 17/86;**
**G01S 17/88; G01S 17/894; G06T 7/10;**
G06T 2207/10028

(54) **Z-PLANE IDENTIFICATION AND BOX DIMENSIONING USING THREE-DIMENSIONAL TIME-OF-FLIGHT IMAGING**

Z-EBENEN-IDENTIFIKATION UND KASTENDIMENSIONIERUNG MIT DREIDIMENSIONALER FLUGZEITBILDGEBUNG

IDENTIFICATION DE PLAN Z ET DIMENSIONNEMENT DE BOÎTE À L'AIDE D'UNE IMAGERIE DE TEMPS DE VOL TRIDIMENSIONNELLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.03.2023 US 202318188316**

(43) Date of publication of application:
**25.09.2024 Bulletin 2024/39**

(73) Proprietor: **Analog Devices, Inc.**
**Wilmington, MA 01887 (US)**

(72) Inventors:
• **Mathy, Charles**
**Wilmington, 01887 (US)**
• **Cho, Peter**
**Wilmington, 01887 (US)**
• **Demirtas, Sefa**
**Wilmington, 01887 (US)**

(74) Representative: **Wallin, Nicholas James**
**Withers & Rogers LLP**
**2 London Bridge**
**London SE1 9RA (GB)**

(56) References cited:
**WO-A1-2022/066611**

## Description

<u>CROSS-REFERENCE TO RELATED APPLICATION(S)</u>

This application is a continuation-in-part of PCT application no. PCT/US2021/051238, filed September 21, 2021, and entitled "Z-PLANE IDENTIFICATION AND BOX DIMENSIONING USING THREE-DIMENSIONAL TIME-OF-FLIGHT IMAGING," which claims priority to U.S. provisional patent application nos. 63/081,742, filed September 22, 2020 and entitled "BOX DIMENSIONING USING THREE-DIMENSIONALTIME-OF-FLIGHT IMAGING," and 63/081,775, filed September 22, 2020 and entitled "WORLD Z-PLANE IDENTIFICATION IN TIME-OF-FLIGHT IMAGERY".

<u>BACKGROUND</u>

Man-made environments are generally endowed with a preferred direction corresponding to the local orientation of earth's gravity field. In simple terms, "up" and "down" define natural engineering directions for indoor settings (e.g., rooms) and outdoor settings (e.g., streets). Floors, walls, and ceilings are strongly constrained by the direction of local gravity. In particular, man-made environments are usually populated by horizontal Z-planes (e.g., tabletops, chair seats, floors, sidewalks).

As a person walks around a man-made environment while holding a 3D time-of-flight (TOF) imaging system in hand, the sensor's angular orientation relative to the natural "up" and "down" directions is typically unknown. Humans do not reliably align imaging systems to their environments, and having users align and re-align sensors to match their environment can be a time-consuming and frustrating process.

One potential application of TOF imaging systems is determining the dimensions of boxes. Measuring volumes of physical objects is a basic problem for various industrial and consumer markets, such as packing, shipping, and storage of objects. In typical packing and shipping contexts, humans use tape measures to measure box dimensions, which is a time-consuming process. Existing technical solutions are often fragile, expensive, and/or can only be used in certain settings. For example, some dimensioning solutions rely on fixed frames of reference, e.g., deriving the volume of a box placed on a designated surface from an image taken by a camera at a fixed position relative to the designated surface.

<u>BRIEF DESCRIPTION OF THE DRAWINGS</u>

To provide a more complete understanding of the present invention, which is defined by the appended claims, and advantages thereof, reference is made to the following description, taken in conjunction with the accompanying figures, wherein like reference numerals represent like parts, in which:

FIG. 1 is a block diagram of a TOF sensor system, according to some embodiments of the present disclosure.

FIG. 2 illustrates ray directions of pixels of a TOF sensor, according to some embodiments of the present disclosure.

FIG. 3 is a flow diagram showing a process for identifying a Z-plane in TOF data obtained in an arbitrary frame of reference, according to some embodiments of the present disclosure.

FIG. 4 is a flow diagram showing a process for identifying basis vectors based on TOF data, according to some embodiments of the present disclosure.

FIG. 5 is a flow diagram showing a process for identifying a Z-plane in a point cloud transformed based on the identified basis vectors, according to some embodiments of the present disclosure.

FIG. 6 is a flow diagram showing a process for determining and outputting box dimension based on TOF data, according to some embodiments of the present disclosure.

FIG. 7 is a flow diagram showing a process for identifying a box top and a box bottom, according to some embodiments of the present disclosure.

FIG. 8 is a flow diagram showing a process for calculating the length and width of the box top, according to some embodiments of the present disclosure.

FIG. 9 is an example image showing a box resting on a tabletop, according to some embodiments of the present disclosure.

FIG. 10 illustrates an example of distance data obtained by a TOF sensor, according to some embodiments of the present disclosure.

FIG. 11 illustrates an example point cloud calculated from the distance data, according to some embodiments of the present disclosure.

FIGs. 12A and 12B illustrate example angular coordinates of the surface normals of the points in the point cloud, according to some embodiments of the present disclosure.

FIG. 13 is an example histogram that bins angular coordinates of the surface normals, according to some embodiments of the present disclosure.

FIG. 14 illustrates an example of the point cloud transformed into a reference coordinate system of the identified basis vectors, according to some embodiments of the present disclosure.

FIG. 15 is an example height map obtained from the transformed point cloud, according to some embodiments of the present disclosure.

FIG. 16 is an example Z-profile of the height map with peaks indicating various horizontal surfaces, according to some embodiments of the present disclosure.

FIG. 17 illustrates four example Z-plane slices identified from the height map, according to some embodiments of the present disclosure.

FIGs. 18A-18B illustrate two sets of connected components for two different Z-plane slices, according to some embodiments of the present disclosure.

FIGs. 19A-19B illustrate two candidate box tops identified in the connected components, according to some embodiments of the present disclosure.

FIG. 20 illustrates a set of points corresponding to a connected component identified as the box top, according to some embodiments of the present disclosure.

FIG. 21 is an example profile of the box top projected along the x- and y-axes, according to some embodiments of the present disclosure.

FIG. 22 illustrates an axis-aligned box top rotated based on the profile in FIG. 21, according to some embodiments of the present disclosure.

FIGs. 23A and 23B show example box top width and length profiles, according to some embodiments of the present disclosure.

FIG. 24 illustrates identified box edges overlayed on an image obtained by the TOF sensor, according to some embodiments of the present disclosure.

FIG. 25 illustrates identified box edges and determined box dimension overlayed on an image obtained by a camera, according to some embodiments of the present disclosure.

FIG. 26 illustrates an example process for box dimensioning, which can include other examples for identifying Z-Planes, and performing box dimensioning based on the identified Z-Planes, according to some embodiments of the present disclosure.

FIG. 27 is a flow diagram showing a process for identifying a Z-plane in raw TOF data, according to the invention.

FIG. 28 is a flow diagram showing an example process for identifying a Z-plane in a point cloud, according to some embodiments of the present disclosure.

FIG. 29 is a flow diagram showing a process for determining and outputting box dimension based on TOF data, according to some embodiments of the present disclosure.

FIG. 30 is a flow diagram showing an example process for identifying the box top and the box bottom, according to some embodiments of the present disclosure.

FIG. 31 is a flow diagram showing an example process for calculating the length and width of the box top, according to some embodiments of the present disclosure.

FIG. 32 is a flow diagram showing an example process for refining the box top data, according to some embodiments of the present disclosure.

## DESCRIPTION OF EXAMPLE EMBODIMENTS OF THE DISCLOSURE

### Overview

The systems, methods and devices of this disclosure each have several innovative aspects, no single one of which is solely responsible for all of the desirable attributes disclosed herein. Details of one or more implementations of the subject matter described in this specification are set forth in the description below and the accompanying drawings.

Reliable identification of Z-planes (e.g., a floor, a street, a tabletop) in an environment can be useful in many two-dimensional and three-dimensional image processing applications. In particular, it is useful to determine a time-of-flight sensor's roll and pitch angles relative to a Z-plane, as well as the sensor's height relative to Z-planes in its environment. As used herein, a Z-plane is a plane in a real-world environment that is parallel to the ground in a particular environment. Z-planes include the ground or floor, and surfaces parallel to the ground or floor. In many cases, the Z-plane is perpendicular to the direction of gravity. In some cases, e.g., on a hill or other slanted surface, Z-planes (e.g., the ground, a table resting on the ground) may be somewhat tilted with respect to the direction of gravity.

A base Z-plane is the lowest Z-plane within an image that captures an environment. For example, in an image of an environment that includes a box resting on a table placed on a floor, the box top, tabletop, and floor are all Z-planes, and the floor is the base Z-plane. If another image includes the box and the tabletop but does not include the floor, the tabletop is the base Z-plane for that image.

Methods and systems for identifying Z-planes in an environment and, in some cases, identifying a base Z-plane in an environment, are described herein. An example of a method involves extracting parameters for the roll and pitch rotation angles relative to a Z-plane. In some embodiments, the method also extracts a parameter for the height of the sensor relative to the base Z-plane from a single input TOF depth frame. Once the two rotation parameters and translation parameters are extracted, the number of a priori unknown extrinsic camera calibration parameters is reduced from six (3 translations + 3 rotation angles) to three (2 translations + 1 rotation angle). Time-of-flight applications become easier and faster for processing systems to handle when the number of unknown sensor degrees of freedom is reduced in this way. In addition, aligning coordinate system axes to a Z-plane simplifies time-of-flight imagery exploitation in several applications, such as box dimensioning, object dimensioning, box packing, or obstacle detection.

Methods and systems for measuring dimensions of a box are also described herein. One example of a method involves receiving a three-dimensional point cloud obtained from time-of-flight data and identifying a box within the point cloud. In particular, the method includes identifying a box top within the point cloud, and then identifying a surface on which the box is resting, such as a tabletop or the floor. The method then includes calculating the height of the box as the distance between the box top and the surface on which the box is resting, and identifying edges of the box top. The method then includes calculating width and length profiles for the edges, and determining a width and a length for the box based on the width and length profiles. Quantitative height, width, and length values, e.g., measured in centimeters, may be reported to a user, e.g., on a display of a TOF measurement device. In some examples, the device also generates a visualization of the identified box superimposed on an image of the box so that the user may qualitatively confirm the calculated dimensions.

Existing box dimensioning solutions are typically highly vulnerable to sunlight because sunlight creates significant noise in TOF data or image data. Prior box dimensioning systems were only suitable for indoor use or under particular lighting conditions. In some embodiments described herein, TOF measurement data is filtered to reduce the impact of visual noise, enabling the TOF sensor system to be used in a variety of ambient lighting conditions, including both indoors and outdoors. In one example, the measurement data is filtered at a first stage for identifying Z-planes in the observed environment. Because Z-planes are relatively large, an aggressive filter (e.g., a large filter window) can be used. As noted above, after the box has been identified using the Z-planes, the box edges are identified. A finer filter (e.g., a smaller filter window) may be used to filter the measurement data for finding the box edges, since more precision is needed at this stage.

One embodiment provides a method for identifying a Z-plane. An example of a method includes receiving distance data describing distances between a sensor that captured the distance data and a plurality of surfaces in an environment of the sensor, where at least one of the surfaces is a Z-plane; generating a point cloud based on the distance data, the point cloud in a frame of reference of the sensor; identifying a basis vector representing a peak direction across the point cloud; transforming the point cloud into a frame of reference of the basis vector; and identifying a Z-plane in the transformed point cloud.

Another embodiment provides an imaging system that includes a TOF depth sensor and a processor. The TOF depth sensor obtains distance data describing distances between the TOF depth sensor and a plurality of surfaces in an environment of the TOF depth sensor. The processor receives the distance data from the TOF depth sensor; generates a point cloud based on the distance data, the point cloud in a frame of reference of the TOF depth sensor; identifies a basis vector representing a peak direction across the point cloud; transforms the point cloud into a frame of reference of the basis vector; and identifies a Z-plane in the transformed point cloud.

Yet another embodiment provides a method for determining dimensions of a physical box. The method includes receiving distance data describing distances between a sensor and a plurality of surfaces in an environment of the sensor, at least a portion of the surfaces corresponding to a box to be measured; transforming the distance data into a frame of reference of one of the surfaces in the environment of the sensor; selecting, from the plurality of surfaces in the environment of the sensor, a first surface corresponding to a top of the box and a second surface corresponding to a surface the box is resting on; calculating a height between the first surface and the second surface; and calculating a length and a width based on the selected first surface corresponding to the top of the box.

Another embodiment provides an imaging system including a TOF depth sensor and a processor. The TOF depth sensor obtains distance data describing distances between the TOF depth sensor and a plurality of surfaces in an environment of the TOF depth sensor. The processor receives the distance data from the TOF depth sensor; transforms the distance data into a frame of reference of one of the surfaces in the environment of the sensor; selects a first surface corresponding to a top of the box and a second surface corresponding to a surface the box is resting on; calculates a height between the first surface and the second surface; and calculates a length and a width based on the selected first surface corresponding to the top of the box.

Another embodiment provides a method for identifying Z-planes including obtaining raw data from a TOF sensor indicating distance between the TOF sensor and a plurality of surfaces, applying an averaging filter to the raw data to smooth the raw data for increasing signal-to-noise ratio (SNR) of flat surfaces represented in the raw data, performing a depth compute process on the raw data, as filtered, to generate distance data, generating a point cloud based on the distance data, and identifying the Z-planes in the point cloud.

Another embodiment provides an imaging system including a TOF depth sensor configured to obtain raw data indicating distances between the TOF depth sensor and a plurality of surfaces in an environment of the TOF depth sensor, and a processor. The processor is configured to apply an averaging filter to the raw data to smooth the raw data for increasing SNR of flat surfaces represented in the raw data, perform a depth compute process on the raw data, as filtered, to generate distance data, generate a point cloud based on the distance data, and identify the Z-planes in the point cloud.

As will be appreciated by one skilled in the art, aspects of the present disclosure, in particular aspects of identifying a Z-plane and determining box dimensions based on TOF imagery, described herein, may be embodied in various manners (e.g., as a method, a system, a computer program product, or a computer-readable storage medium). Accordingly, aspects of the present disclosure may take the form of a hardware embodiment, a software embodiment (including firmware, resident software, micro-code, etc.), or an embodiment combining software and hardware aspects that may all generally be referred to herein as a "circuit," "module" or "system." Functions described in this disclosure may be implemented as an algorithm executed by one or more hardware processing units, e.g. one or more microprocessors, of one or more computers. In various embodiments, different steps and portions of the steps of each of the methods described herein may be performed by different processing units. Furthermore, aspects of the present disclosure may take the form of a computer program product embodied in one or more computer-readable medium(s), preferably non-transitory, having computer-readable program code embodied, e.g., stored, thereon. In various embodiments, such a computer program may, for example, be downloaded (updated) to the existing devices and systems (e.g. to the existing perception system devices and/or their controllers, etc.) or be stored upon manufacturing of these devices and systems.

The following detailed description presents various descriptions of specific certain embodiments. However, the innovations described herein can be embodied in a multitude of different ways, for example, as defined and covered by the claims and/or select examples. In the following description, reference is made to the drawings where like reference numerals can indicate identical or functionally similar elements. It will be understood that elements illustrated in the drawings are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings.

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions must be made to achieve the developer's specific goals, including compliance with system, business, and/or legal constraints, which may vary from one implementation to another. Moreover, it will be appreciated that, while such a development effort might be complex and time-consuming; it would nevertheless be a routine undertaking for those of ordinary skill in the art having the benefit of this disclosure.

In the Specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as "above", "below", "upper", "lower", "top", "bottom", or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction. When used to describe a range of dimensions or other characteristics (e.g., time, pressure, temperature, length, width, etc.) of an element, operations, and/or conditions, the phrase "between X and Y" represents a range that includes X and Y.

Other features and advantages of the disclosure will be apparent from the following description and the claims.

TOF System Overview

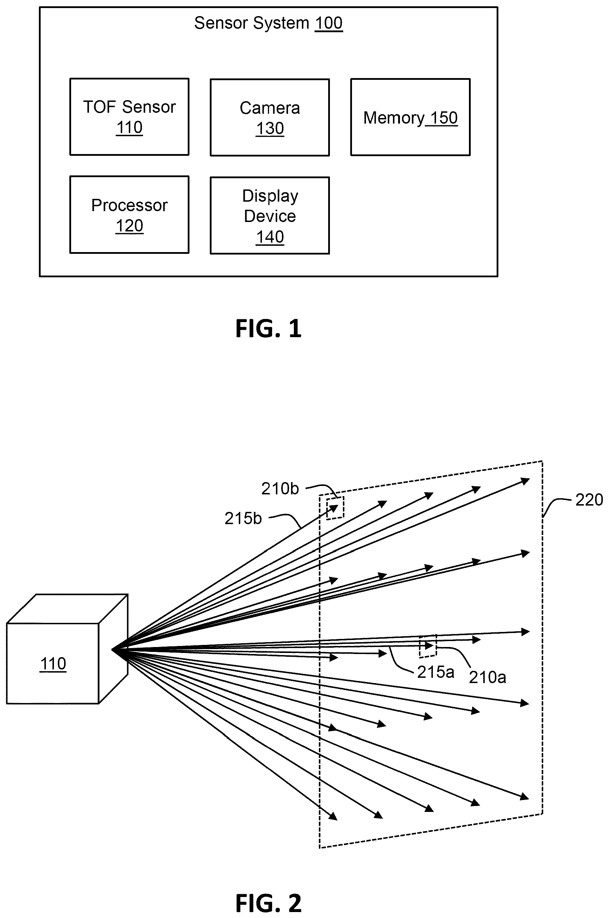

FIG. 1 is a block diagram of an example sensor system 100, according to some embodiments of the present disclosure. The sensor system 100 includes a TOF sensor 110, a processor 120, a camera 130, a display device 140, and a memory 150. In alternative configurations, different, fewer, and/or additional components may be included in the TOF sensor system from those shown in FIG. 1. Furthermore, the functionality described in conjunction with one or more of the components shown in FIG. 1 may be distributed among the components in a different manner than described. In some embodiments, some or all of the components 110-150 may be integrated into a single unit, e.g., a handheld unit having a TOF sensor 110, a processor 120 for processing the TOF data, a local memory 150, and a display device 140 for displaying an output of the processor 120 to a user. In some embodiments, some components may be located in different devices, e.g., a handheld TOF sensor 110 may transmit TOF data to an external processing system (e.g., a computer or tablet) that stores and processes the TOF data and provides one or more displays to a user. Different devices may communicate over wireless or wired connections.

The TOF sensor 110 collects and/or determines distance data describing a distance between the TOF sensor 110 and various surfaces in the environment of the TOF sensor 110. The TOF sensor 110 may contain a light source, e.g., a laser, and an image sensor for capturing light reflected off the surfaces. In some embodiments, the TOF sensor 110 can emit a pulse of light and capture multiple image frames at different times to determine an amount of time for the light pulse to travel to the surface and be returned to the image sensor. In other embodiments, the TOF sensor 110 can detect phase shifts in the captured light, and the phase shifts indicate the distance between the TOF sensor 110 and various surfaces. In some embodiments, the TOF sensor 110 may generate and capture light at multiple different frequencies. If the TOF sensor 110 emits and captures light at multiple frequencies, this can help resolve ambiguous distances and help the TOF sensor 110 work at larger distance ranges. For example, if, for a first frequency, a first observed phase may correspond to a surface 0.5 meters, 1.5 meters, or 2.5 meters away, and, for a second frequency, a second observed phase may correspond to a surface 0.75 meters, 1.5 meters, or 2.25 meters away, by combining the two observations, the TOF sensor 110 can determine that the surface is 1.5 meters away. Using multiple frequencies may also improve robustness against noise caused by particular frequencies of ambient light, whether phase shift or pulse return time are used to measure distance. In alternate embodiments, different types of sensors may be used instead of and/or in addition to the TOF sensor 110 to obtain distance data. In any case, the TOF sensor 110 can collect raw data, such as the returned pulse from objects and surfaces in the scene, or the TOF sensor 110 can compute raw data based on the returned pulse from objects and surfaces such as samples of the correlation function between the emitted pulse and the returned pulse. In some embodiments, a TOF sensor 110 may be equipped to compute raw data such as linear and nonlinear transformations of such a correlation function between the emitted pulse and the returned pulse. This raw data may include information about the amount of time for the light pulse to travel and return at the image sensor, the phase shift, etc., and can be used to compute the distance (or depth data) using a distance (or depth) compute process.

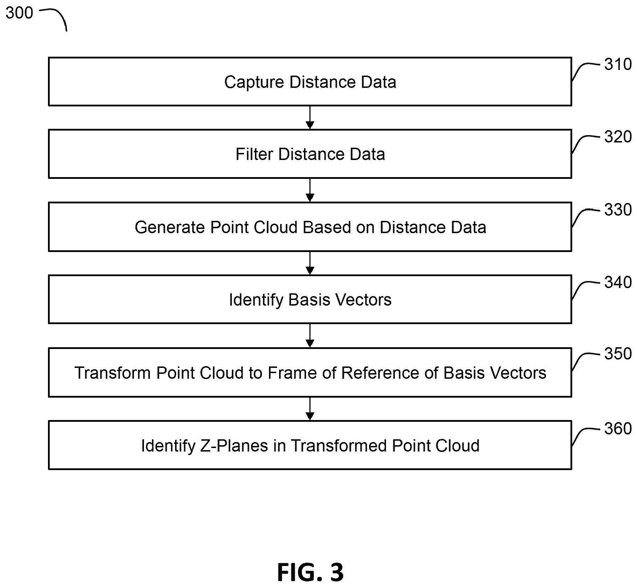

The processor 120 receives distance data from the TOF sensor 110 and processes the distance data to identify various features in the environment of the TOF sensor 110, as described in detail herein, e.g., with respect to FIGs. 3-8 and 27-32. In some embodiments, the distance data includes the observed distances to various surfaces measured by the TOF sensor 110 using, e.g., the phase shift or pulse return time methods described above. In some embodiments, if the TOF sensor 110 measures phase shifts, the distance data received by the processor 120 from the TOF sensor 110 is the phase shift data, and the processor 120 calculates the distances to the surfaces from the phase shift data. Moreover, in some embodiments, processor 120 can apply operations to the raw data before distance data is determined. For example, the operations may include applying one or more filters to the raw data to smooth pixels and increase signal-to-noise ratio (SNR), which may improve estimation of surface normal, as described herein.

A camera 130 may capture image frames of the environment. The camera 130 may be a visual light camera that captures images of the environment in the visible range. In other embodiments, the camera 130 is an infrared (IR) camera captures IR intensities of the surfaces in the sensor system's environment. The field of view of the camera 130 and TOF sensor 110 are partially or fully overlapping, e.g., the field of view of the camera 130 may be slightly larger than the field of view of the TOF sensor 110. The camera 130 may pass captured images to the processor 120. In some embodiments, two processors or processing units may be included, e.g., a first processing unit for performing the Z-plane identification and box dimensioning algorithms described herein, and a second graphical processing unit that receives images from the camera 130 and generates displays based on the images and data from the first processing unit. In some embodiments, image data from the camera 130 may be used to determine a level of sunlight in the environment of the TOF sensor 110. In alternate embodiments, the sensor system 100 may include a separate light sensor for detecting sunlight or other ambient light conditions in the environment of the TOF sensor 110. In one example, the camera 130 can be programmed to output active brightness (AB) and phases. AB-phase mode can allow for providing a fixed number of bits for the phase.

The display device 140 provides visual output for a user of the sensor system 100. For example, the display device 140 may display box dimensions and/or a box volume calculated by the processor 120 based on distance data from the TOF sensor 110. In some embodiments, the display device 140 displays an image obtained by the camera 130 and overlays visual imagery indicating one or more features identified in the field of view of the camera 130 and TOF sensor 110 based on the distance data. For example, the processor 120 may instruct the display device 140 to display an outline or wire-frame of a box over an image of the box obtained by the camera 130. A user can use this display to determine whether the sensor system 100 has correctly identified the box and the box's edges. The sensor system 100 may include additional or alternative input and/or output devices, e.g., buttons, a speaker, a touchscreen, etc.

The memory 150 stores data for the sensor system 100. For example, the memory 150 stores processing instructions used by the processor 120 to identify features in the environment of the TOF sensor 110, e.g., instructions to identify one or more Z-planes and/or to calculate box dimensions of an observed box. The memory 150 may temporarily store data and images obtained by the camera 130 and/or TOF sensor 110 and accessed by the processor 120. The memory 150 may further store image data accessed by the display device 140 to generate an output display.

FIG. 2 illustrates ray directions of pixels of the TOF sensor 110, according to some embodiments of the present disclosure. The distance data obtained by the TOF sensor 110 may be arranged as a set of pixels, e.g., the pixels 210a and 210b, within an image frame, e.g., the image frame 220. Each pixel 210 has an associated ray direction 215, where the ray direction 215 points outwards from the TOF sensor 110. The ray directions 215 are projected towards the image frame 220. While 25 rays and pixels are shown in FIG. 2, it should be understood that the TOF sensor 110 may have many more pixels. While the image frame 220 has a square shape in the example shown in FIG. 2, the image frame 220 may have other shapes in other embodiments. In some examples, certain pixels, e.g., pixels near the edge of the image frame 220, may not be considered valid (e.g., not sufficiently reliable), and are removed from the distance data.

For example, a first pixel 210a has a ray direction 215a that extends straight out from the TOF sensor 110; the pixel 210a is in the center of the image frame 220. A second pixel 210b at a corner of the image frame 220 is associated with a ray direction 215b that extends out from the TOF sensor 110 at, for example, a 30° angle in both an x-direction and y-direction from the center of the image frame 220, where the image frame 220 is an x-y plane in a frame of reference of the TOF sensor 110. The TOF sensor 110 returns distance data (e.g., a distance, one or more phase shifts) to a surface along each valid pixel's ray. In one example, the first pixel 210a may have a measured distance of 1 meter representing a distance to a particular point on a box, and the second pixel 210b may have a measured distance of 2 meters representing a distance to particular point on a wall behind the box.

Example Process for Identifying a Z-Plane

FIG. 3 is a flow diagram showing a process 300 for identifying a Z-plane in TOF data obtained in an arbitrary frame of reference, according to some embodiments of the present disclosure. The TOF sensor 110 captures 310 distance data of an environment, including various surfaces in the environment. It may be assumed that at least one of the surfaces is a Z-plane. The TOF sensor 110 passes the distance data to the processor 120. In some examples, the camera 130 captures an image of the environment, e.g., at the same time that the TOF sensor 110 captures the distance data, and the camera 130 passes the image to the processor 120.

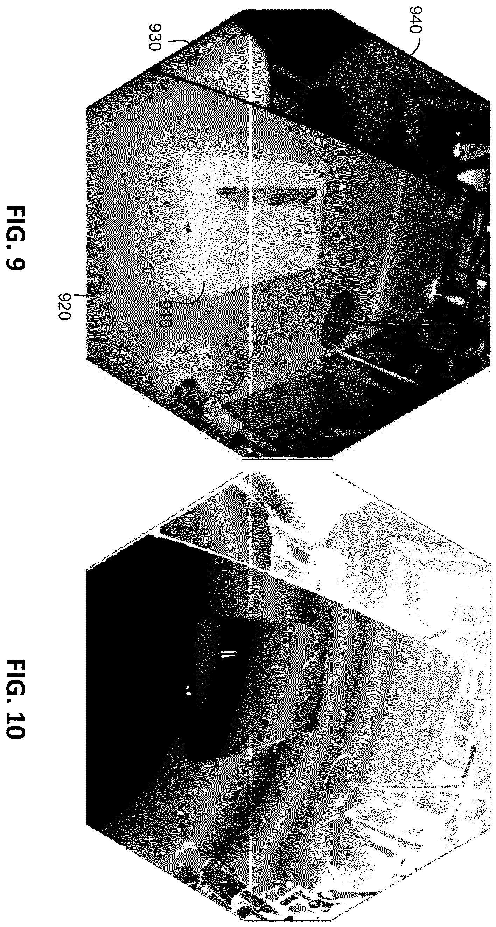

FIGs. 9 and 10 show two example visual representations of the inputs from the camera 130 and the TOF sensor 110. FIG. 9 is an example image showing a box resting on a tabletop, according to some embodiments of the present disclosure. In this example, FIG. 9 shows an IR intensity image that shows a box 910 sitting on a table 920, with a chair 930 and a floor 940 to the left of the table. The IR intensity image may be used during visualization (e.g., to visualize the locations of the extracted world Z-planes, or for visualizations of other applications, such as box dimensions).

FIG. 10 illustrates an example of distance data obtained by a TOF sensor, according to some embodiments of the present disclosure. The field of view of the TOF sensor 110 shown in FIG. 10 corresponds to the field of view of the IR intensity image shown in FIG. 9. The distance data is represented by shading, where different shades represent difference distances from the TOF sensor 110 to the various surfaces in the environment of the TOF sensor 110, e.g., the box 910 is closer to the TOF sensor 110 than the floor 940. As described with respect to FIG. 2, the distance data is comprised of various pixels having the ray directions 215 shown in FIG. 2.

In some embodiments, the processor 120 filters 320 the received distance data. Ambient light in the environment of the TOF sensor 110 can create noise in the distance data. To reduce the effect of noise, a filter, e.g., an integral filter, may be applied to the distance data before further analysis is performed. Filtering the noise in this manner may be particularly useful if the TOF sensor 110 captures data in an outdoor environment, due to the noise caused by sunlight. To filter the distance data, the processor 120 may compute, for each pixel, an average pixel value based on pixel values in a region around the pixel. For example, the filtered pixel value for a given pixel may be the average value for an 11x11 or 21x21 square of pixels centered on the given pixel. In some embodiments, the processor 120 performs the filtering on phase measurement data received from TOF sensor 110, e.g., the processor 120 first filters multiple phase measurements (for different frequencies, as described above), and then processes the filtered phase data to determine a distance measurement for each pixel. Alternatively, the processor 120 may filter the distance measurements, e.g., if the pulse return method is used to obtain the distance data.

In some embodiments, the filtering step may be omitted, e.g., if, the TOF sensor 110 is intended for use in an environment with relatively low noise levels, e.g., if the TOF sensor 110 is designed for indoor use only. In some cases, the processor 120 may perform filtering in response to determining that there is a threshold level of sunlight in the environment of the TOF sensor 110. Furthermore, in some embodiments, the processor 120 may perform adaptive filtering based on the type or level of ambient light in the environment of the TOF sensor 110, e.g., using a larger filter window when brighter sunlight is detected, using a larger filter window when a greater frequency distribution is detected in the ambient light, or using a larger filter window when particular frequencies known to interact with the TOF sensor 110 are detected in the ambient light.

The processor 120 generates 330 a point cloud based on the distance data and the pixel ray directions 215. For example, for each individual pixel, the processor 120 multiplies the ray direction 215 for the pixel by the measurement distance to the surface for that pixel, e.g., the measurement distance shown in FIG. 10. The processor 120 may retrieve the ray directions 215 from the memory 150.

The point cloud is in the reference frame of the TOF sensor 110, also referred to as the ego frame. For example, if a user is holding the TOF sensor 110 at a slight angle relative to the ground in the environment, the Z-direction in the reference frame of the TOF sensor 110 does not align with the Z-planes in the environment (e.g., the Z-direction in the reference frame is angled relative to the direction of gravity, if the Z-planes are perpendicular to the direction of gravity).

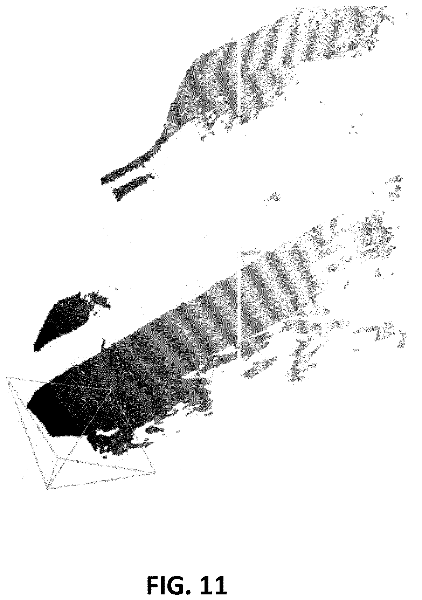

FIG. 11 illustrates an example point cloud calculated from the distance data, according to some embodiments of the present disclosure. Because the TOF sensor 110 was at an arbitrary angle relative to the Z-planes in the environment when the distance data was captured, the resulting point cloud in the reference frame of the TOF sensor 110 is difficult for humans to interpret. This point cloud is also challenging for computer algorithms to work with in various applications that make use of TOF data.

The processor 120 identifies 340 basis vectors for a frame of reference of the surfaces in the environment, also referred to as a "world" frame of reference. A first basis vector corresponds to the direction perpendicular to the Z-planes in the environment observed by the TOF sensor 110. Second and third basis vectors are each orthogonal to the first basis vector. The basis vectors define a "world" coordinate system, i.e., a coordinate system in which the Z-planes are horizontal.

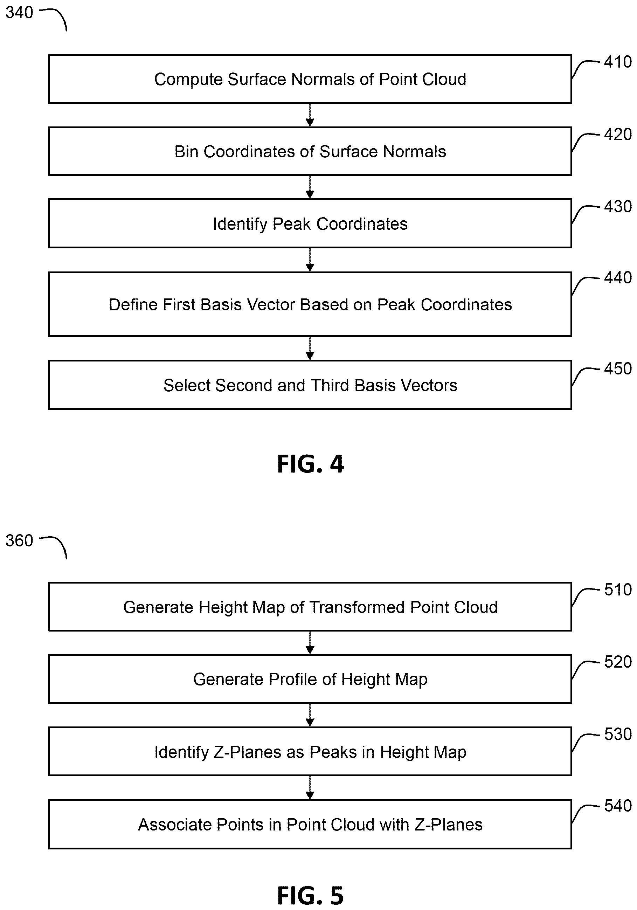

FIG. 4 is a flow diagram showing an example process for identifying basis vectors based on TOF distance data, according to some embodiments of the present disclosure. From the three-dimensional point cloud in the ego frame (e.g., the point cloud shown in FIG. 11), the processor 120 computes 410 surface normal vectors (also referred to as surface normals) for the points within the point cloud. To compute the surface normal for a given point, the processor 120 may fit a plane to a set of points in a region around the individual point, and the processor 120 then computes the surface normal to the fitted plane. For flat surfaces (e.g., floors, box surfaces, walls), the surface normals associated with the point cloud are fairly uniform, with some noise variation. As noted above, the filtering 320 can reduce the noise variation in the surface normals. The surface normals may be represented by polar and azimuthal angles in a polar coordinate system. In other embodiments, Cartesian coordinate systems may be used to represent the surface normal vectors.

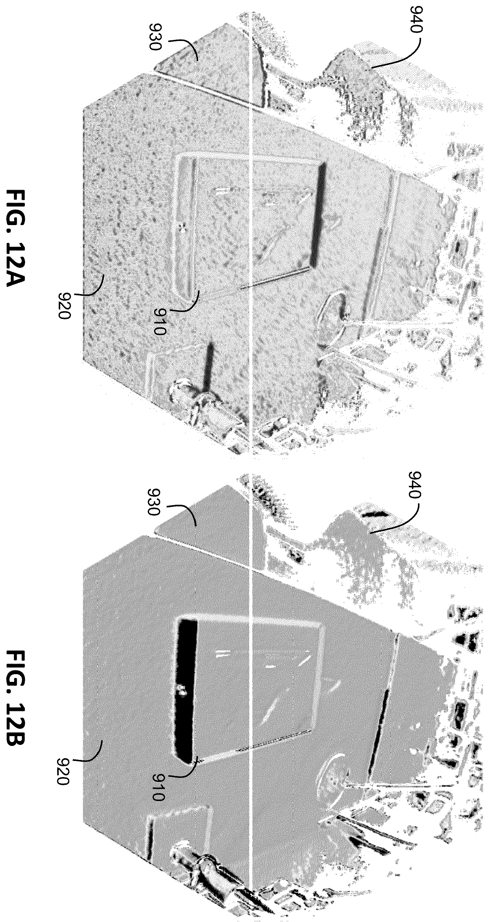

FIGs. 12A and 12B illustrate example angular coordinates of the surface normals of the points in the point cloud shown in FIG. 11, according to some embodiments of the present disclosure. In particular, FIG. 12A shows the polar angles of each of the computed surface normals, and FIG. 12**B** shows the azimuthal angles of each of the computed surface normals. As these figures illustrate, the Z-planes, which correspond to the top of the box 910, the 920 table, and chair 930, have consistent surface normals across their surfaces, with some variations due to noise in the distance data. Moreover, because each of these objects are flat along a Z-plane, they each have a similar surface normal (represented by the similar shade across these Z-planes in each of the two images). The front face of the box 910, by contrast, has an orthogonal surface normal relative to the Z-planes, as represented by the darker shading in the front face of the box 910 in FIG. 12B.

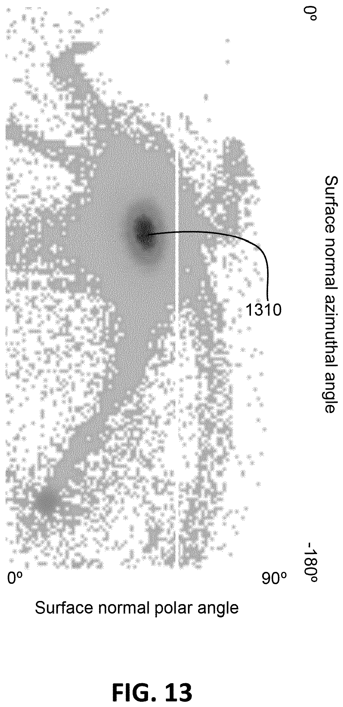

Having computed the surface normals, the processor 120 extracts one or more basis vectors based on the computed surface normals. To extract the first basis vector, the processor 120 may bin 420 the coordinates of the surface normals, e.g., the processor 120 bins the polar and azimuthal angles for each of the computed surface normals. This binning results a two-dimensional distribution. The bins may be represented visually by a histogram, e.g., the two-dimensional histogram that bins angular coordinates of the surface normals shown in FIG. 13. The two-dimensional histogram shown in FIG. 13 has a strong peak 1310 (represented by the dark shading) corresponding to the Z-plane direction vector in the ego frame of the TOF sensor 110. The processor 120 identifies 430 the peak coordinates, e.g., the peak azimuthal angle and the peak polar angle in the two-dimensional distribution of the binned coordinates. The processor 120 defines 440 the first basis vector as the direction vector corresponding to the peak direction (e.g., the peak azimuthal angle and the peak polar angle) of the surface normals across the point cloud, which is the surface normal to the Z-planes in the environment of the TOF sensor 110.

Having selected the first basis vector, processor 120 selects 450 the second and third basis vectors. The second and third basis vectors are orthogonal to the first basis vector (i.e., orthogonal to the surface normal to the Z-planes). The second and third basis vectors are also orthogonal to each other. The first, second, and third basis vectors define the world frame of reference.

In some embodiments, the processor 120 calculates a projection of the TOF sensor's pointing direction (e.g., the ray direction 215b, which extends straight out from the TOF sensor 110) into a Z-plane (e.g., a plane orthogonal to the first basis vector), and the processor 120 selects this projection as the second basis vector. The processor 120 selects the vector orthogonal to the first and second basis vectors as a third basis vector; the processor 120 may compute the third basis vector as the cross product of the first basis vector and the second basis vector. In other embodiments, the second and third basis vectors may be chosen in other ways.

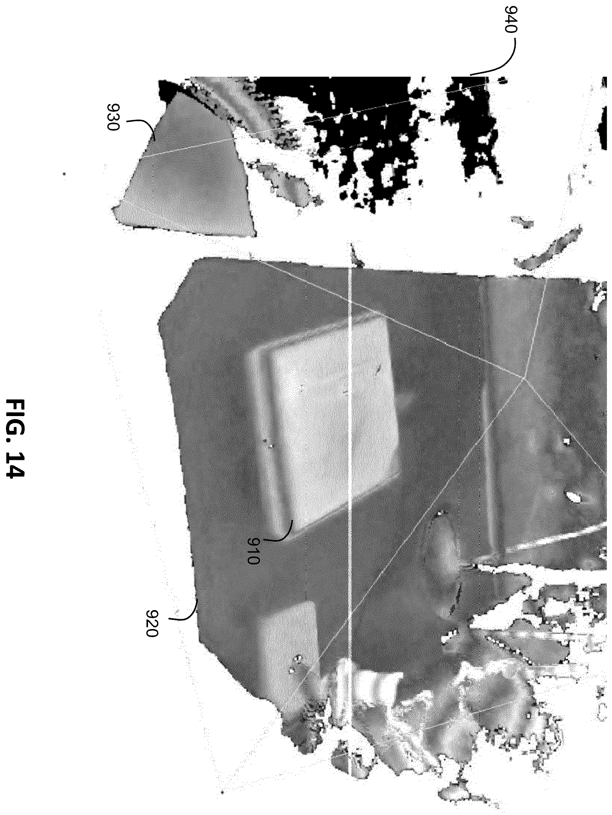

Returning to FIG. 3, having identified the basis vectors, the processor 120 transforms 350 the point cloud to a frame of reference of the basis vectors. For example, each point in the untransformed point cloud may be defined as a vector (e.g., the product of the ray direction and the measured distance, where the ray direction is a vector in the reference frame of the TOF sensor 110, as described above). In the transformed point cloud, each point may be defined as a linear combination of the basis vectors. In particular, the processor 120 may define each point as a sum of the basis vectors each multiplied by a scalar, where the processor 120 determines each of the scalars by computing an inner product of the point in the untransformed point cloud (in vector notation) and the basis vector. FIG. 14 illustrates an example of the point cloud transformed into a reference coordinate system of the identified basis vectors, according to some embodiments of the present disclosure. The transformed point cloud is easier for humans to interpret that the point cloud shown in FIG. 11. The box 910, table 920, chair 930, and floor 940 are visible in the transformed point cloud. Moreover, the transformed point cloud is easier for the processor 120 to work with for further computations (e.g., identifying Z-planes, identifying boxes, and determining box dimensions, as described further below) than the untransformed point cloud in the ego frame. For example, aligning the point cloud to the reference frame of the Z-planes simplifies the steps of identifying and isolating the Z-planes.

The processor 120 next identifies 360 Z-planes in the transformed point cloud. FIG. 5 is a flow diagram showing an example process for identifying a Z-plane in a point cloud transformed based on the identified basis vectors, according to some embodiments of the present disclosure. First, the processor 120 generates 510 a height map from the transformed point cloud. For example, the processor 120 distributes the points the transformed point cloud into square "chimneys," and subsequently selects a representative height for each chimney. Each chimney may be a shape of the same size, e.g., a $(0.75 \text{ cm})^2$ square. Other sizes or shapes may be used to construct the height map. The representative height may be, for example, the top point (maximum height) of the chimney, an average height, a median height, or another height selected or computed from the heights of the points falling within the chimney. Reducing the three-dimensional point cloud down to a two-dimensional height map simplifies data processing and increases computation speed.

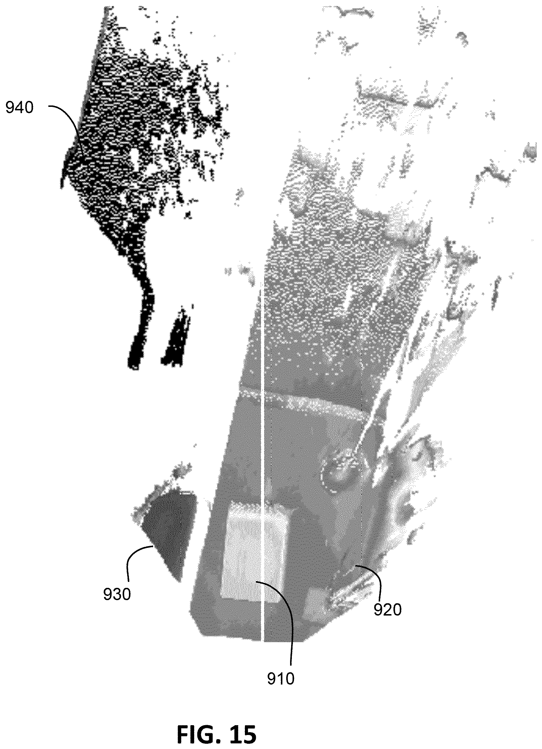

FIG. 15 is an example visual representation of a height map obtained from the transformed point cloud, according to some embodiments of the present disclosure. The shading in FIG. 15 represents the height of each chimney. For example, the lighter shading of the at the top of the box 910 represents a greater height than the darker shading of the table 920.

The processor 120 then generates 520 a profile representation of the height map. For example, the processor 120 integrates the height map over the x- and y-directions to obtain a Z-profile of the height map. This profile represents the probability density of heights within the height map. Peaks within the profile correspond to various flat surfaces, i.e., surfaces that are orthogonal to the first basis vector.

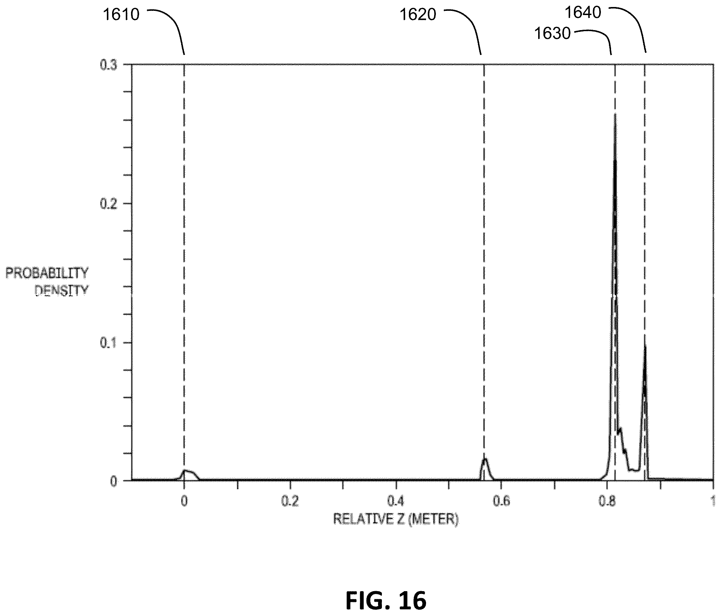

FIG. 16 is an example Z-profile of the height map with peaks indicating various horizontal surfaces, according to some embodiments of the present disclosure. FIG. 16 includes four peaks 1610, 1620, 1630, and 1640. In this example, the peak 1610 at the lowest height corresponds to the floor 940. The next peak 1620 corresponds to the chair 930. The next peak 1630, which is also the tallest peak (indicating that the most points within the height map fall at this peak), corresponds to the table 920. Finally, the last peak 1640 corresponds to the top of the box 910.

The processor 120 identifies 530 the peaks in the profile representation of the height map as Z-planes. For example, for each portion of the Z-profile where the probability density falls above a given threshold (e.g., 0.01), the processor 120 identifies a Z-plane. In some embodiments, the processor 120 applies one or more other rules or heuristics to the Z-profile to identify the Z-planes, e.g., to remove spurious noise peaks while retaining genuine weak signals, such as the floor peak shown on page 9. For example, the processor 120 may identify peaks having at least a threshold number of associated points, or peaks in which the heights fall within a given range of each other.

The processor 120 may select a particular height point within a given peak (e.g., a highest point or a center point) as the Z-plane height for that peak. In some embodiments, the processor 120 selects the lowest Z-value peak as the height of the base Z-plane. The processor 120 may set the height of the base Z-plane to zero, and determine the heights of the other Z-planes based on their height relative to the base Z-plane. For example, the processor 120 sets the height of the floor peak 1610 as 0, and the processor 120 determines that the chair peak 1620 has a height of 0.569 meters, the table peak 1630 has a height of 0.815 meters, and the box top peak 1640 has a height of 0.871 meters.

Having identified the Z-planes and their associated heights, the processor 120 associates 540 various points in the point cloud with the identified Z-planes. For example, the processor 120 may associate a particular point in the point cloud with an identified Z-plane if the height of the point is within a height range of the identified Z-plane. For example, if the height of a particular point is within twice a peak's FWHM (full width at half maximum), the point is associated with the Z-plane corresponding to the peak. In other examples, other ranges around a Z-plane height are used to associate points in the point cloud to Z-planes.

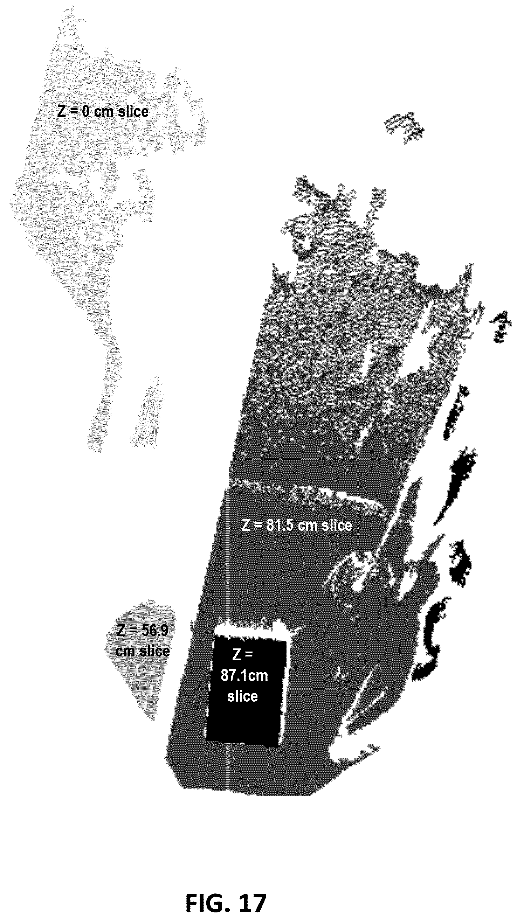

FIG. 17 illustrates four example Z-slices in the point cloud identified from the height map, according to some embodiments of the present disclosure. Each set of points that the processor 120 associated with a particular Z-plane may be referred to as a Z-plane slice, or simply a Z-slice. Each of the Z-slices is represented with a different shading, where the differently shaded Z-slices correspond to Z-planes at different heights.

The transformed point cloud and identified Z-planes can be used for various further processing on the point cloud data. In some examples, the processor 120 can proceed to locate a box in the environment of the TOF sensor 110 and determine dimensions and/or the volume of the box, as described further below. In other examples, the processor 120 can perform other types of identification or analysis on other types of objects in the environment of the TOF sensor 110.

In some embodiments, the sensor system 100 displays outputs of the Z-plane identification process to a user. For example, the processor 120 may correlate the identified Z-planes to various pixels in an image obtained by the camera 130, and generate a display with visual indications of the identified Z-planes. For example, the Z-planes may be outlined or color-coded in a display output by the display device 140. The display device 140 may alternatively or additionally output the determined heights of the identified Z-planes.

## Example Process for Box Dimensioning

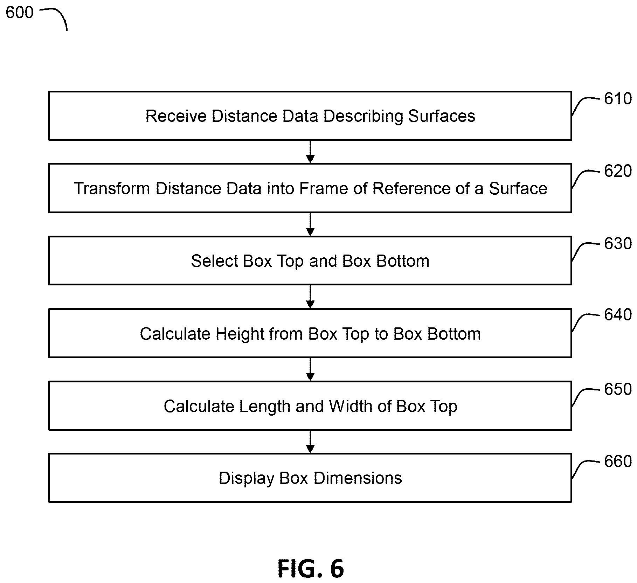

FIG. 6 is a flow diagram showing a process 600 for determining and outputting box dimension based on TOF data, according to some embodiments of the present disclosure. A sensor system, such as the sensor system 100, receives 610 distance data describing various surfaces in the environment of the sensor system 100. For example, as described with respect to steps 310-330 in FIG. 3, the TOF sensor 110 captures distance data, the processor 120 optionally filters the distance data, and the processor 120 generates a point cloud based on the distance data.

For the box dimensioning process, the processor 120 may assume that at least a portion of the surfaces in the environment of the TOF sensor 110 correspond to a box to be measured. Several additional assumptions may be made about the box being measured. Such assumptions can improve the speed and accuracy of the box dimensioning process, particularly in applications where fast detection and measuring of the box are important, e.g., if box dimensions are calculated provided to a user in real or near-real time as the user points the TOF sensor 110 at a box. These assumptions may include that the angles between adjacent surfaces of the box are reasonably close to 90° (e.g., between 85° and 95°, or within some other range); that the box is located within a particular distance of the TOF sensor 110 (e.g., within 3 meters or within 5 meters); that each box dimension is within a particular range (e.g., at least 3 centimeters, or at least 10 centimeters; no more than 2 meters, or no more than 3 meters); that the box is closed; that the top face of the box is visible to the TOF sensor 110; and that the box rests on a flat, horizontal surface (i.e., a Z-plane) that is also visible to the TOF sensor 110.

It should be understood that, in some embodiments, one or more of these assumptions may be relaxed or removed. For example, the range between the sensor and box and the minimum and maximum box dimensions are merely exemplary, and in other embodiments, different ranges and dimensions may be used. In some embodiments, the ranges may vary on the intended uses or target users of the sensor system 100. For example, if the sensor system 100 is used to measuring boxes being loaded into a moving truck (e.g., including wardrobe boxes and boxed furniture), greater distance ranges and greater box dimensions may be used. In some embodiments, a user may be able to input a distance range and/or maximum and minimum box dimensions.

The processor 120 transforms 620 the distance data (e.g., the point cloud calculated based on distance data from the TOF sensor 110) into a frame of reference of a surface in the environment of the TOF sensor 110. For example, as described with respect to steps 340 and 350 in FIG. 3, the processor 120 identifies basis vectors for a frame of reference of the surfaces in the environment of the TOF sensor 110, and the processor 120 transforms the distance data (e.g., the point cloud) into the frame of reference of the basis vectors. A process for transforming the point cloud into the frame of reference of the basis vectors is described in greater detail with respect to FIG. 4. The processor 120 may further identify Z-planes in the transformed distance data, as described with respect to step 360 of FIG. 3 and in greater detail with respect to FIG. 5.

As noted with respect to FIGs. 5 and 17, each of the Z-planes may be represented as a Z-slice of the height map data. The processor 120 selects 630 a surface corresponding to the box top and a surface corresponding to the box bottom based on the height map data. For example, the processor 120 identifies one of the Z-slices as containing the box top, and another of the Z-slices as a surface on which the box is resting (e.g., the floor or a table), which corresponds to the box bottom.

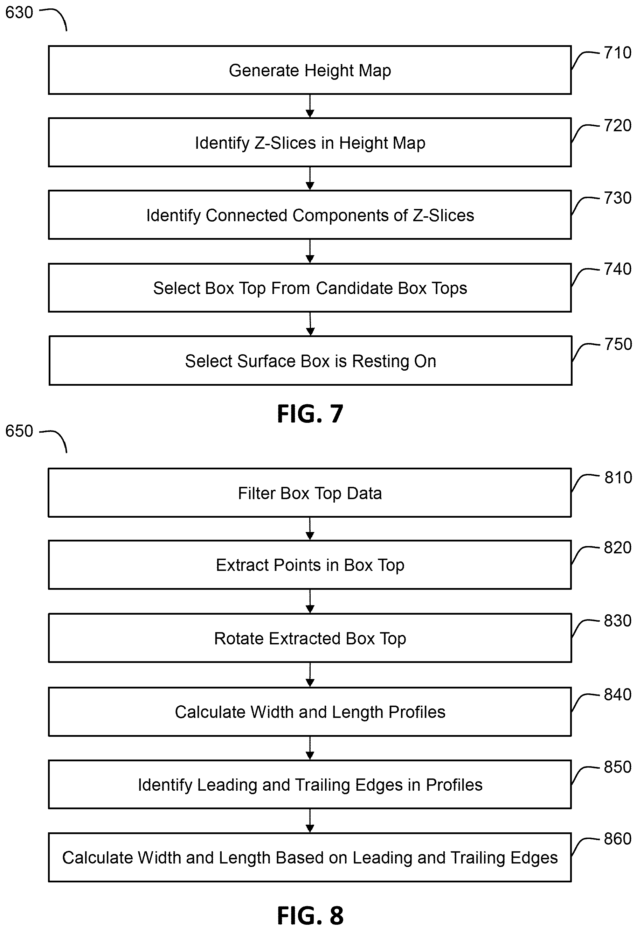

FIG. 7 is a flow diagram showing an example process for identifying the box top and the box bottom, according to some embodiments of the present disclosure. The processor 120 generates 710 a height map based on the distance data. For example, the processor 120 may generate the height map as described with respect to step 510 of FIG. 5. The processor 120 then identifies 720 Z-slices in the height map. For example, the processor 120 generates a profile representation of the height map, identifies Z-planes as peaks in the profile representation of the height map, and associates various points in the distance data (e.g., in the point cloud) with the Z-planes, as described with respect to steps 520-540 of FIG. 5. As noted above, each set of points associated with a particular Z-plane is referred to as a Z-slice.

The processor 120 identifies 730 connected components within at least some of the Z-slices. Each of the connected components may be a candidate box top. To identify a connected component, the processor 120 finds clusters of nearby or connecting points within a Z-slice. The processor 120 may identify a connected component by finding sets of pixels in a Z-slice that may be reached by moving across the Z-slice, e.g., pixels that are within a threshold distance of each other. For example, the processor 120 may select a particular pixel in a Z-slice and recursively add neighboring pixels that are also in the Z-slice to a connected component. Each connected component has a respective height along the Z-axis in the frame of reference of the basis vectors; the height corresponds to the height of the Z-slice.

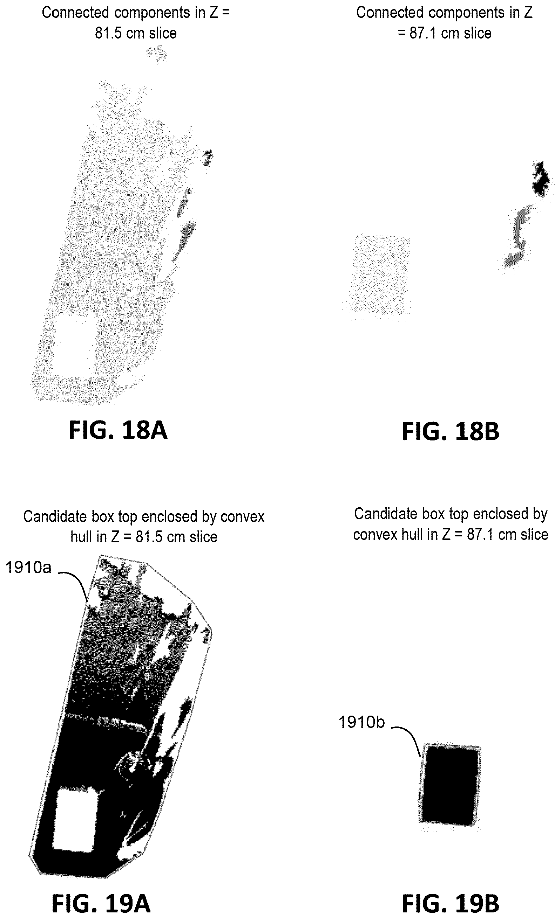

FIGs. 18A-18B illustrate two sets of connected components for two different Z-plane slices, according to some embodiments of the present disclosure. In particular, FIG. 18A illustrates the connected components within the 81.5 cm Z-slice, and FIG. 18B illustrates the connected components within the 87.1 cm Z-slice. Each respective connected component is assigned a different shading. If a box exists in the distance data obtained by the TOF sensor 110, is expected that one of the connected components corresponds to the box top.

In some embodiments, prior to identifying the connected components in the Z-slices, the processor 120 may apply one or more rules to remove one or more Z-slices from consideration as the box top. For example, the processor 120 may eliminate the lowest or base Z-slice as potentially containing the box top, since it is assumed that the box top is above the lowest surface. The processor 120 may also remove a Z-slice that does not lie sufficiently close within the height map (in the x- and y-direction) to some other, lower Z-slice (i.e., a potential surface for the box to be resting on). For example, for the Z-plane slices shown in FIG. 17, the processor 120 may remove the Z = 56.9 cm slice from consideration because it is not sufficiently close to the only Z-slice that is lower than it, the Z = 0 cm slice. By contrast, the 56.9 cm Z-slice is sufficiently close to the Z = 81.5 cm Z-slice that the Z = 81.5 cm Z-slice cannot be eliminated as potentially containing a box top, with the 56.9 cm Z-slice being the surface holding the box bottom.

Having identified the connected components representing candidate box tops, the processor 120 selects 740 one of the connected components as the box top. The processor 120 may apply various rules to the connected components to identify the box top. For example, the processor 120 may remove connected components that are very small (e.g., having a width and/or length below the threshold minimum box dimensions described above). The processor 120 may remove connected components that are highly elongated or non-compact (e.g., the connected component has a large perimeter compared to the square root of its area). The processor 120 may remove connected components for which a box bottom (i.e., the surface on which the box is resting) cannot be derived from the height map, e.g., because no other connected component or Z-slice is sufficiently close to the connected component in the height map in the x- and y-direction.

Having applied these rules to the connected components shown in FIGs. 18A and 18B, two connected components, shown in FIGs. 19A and 19B, remain as candidate box tops. FIGs. 19A and 19B illustrate two candidate box tops identified in the connected components. In particular, FIG. 19A shows a connected component 1910a in the Z = 81.5 cm slice, and FIG. 19B shows a connected component 1910b in the Z = 87.1 cm slice. To select one of the remaining connected components as the box top, the processor 120 applies an additional rule that considers the shape of the convex hull polygon enclosing the connected component, e.g., how closely the convex hull polygon matches an expected rectangular shape. The convex hull polygons 1920a and 1920b are drawn around each of the connected components in FIGs. 19A and 19B. The convex hull polygon 1920a in FIG. 19A strongly deviates from a rectangular shape, while the convex hull polygon 1920b in FIG. 19B is very nearly a rectangle, e.g., the convex hull polygon 1920b deviates from an expected rectangular shape by less than a threshold deviation. Thus, the processor 120 selects the rectangular connected component in the 87.1 cm Z-slice as the box top in this example.

While several example rules for identifying a box top are discussed above, the processor 120 may apply additional, fewer, or different rules to the connected components to identify the box top in different embodiments. In some embodiments, if multiple candidates pass each of the rules described above, the processor 120 may use an additional rule or rules for choosing between the possible box tops. For example, the processor 120 may select the candidate box top that is closest to the TOF sensor 110.

Having identified the box top, the processor 120 identifies 750 the surface on which the box is resting, which corresponds to the box bottom. For example, the processor 120 selects a Z-slice that has a lower height than the box top and that is closest in lateral range to the box top in the height map, e.g., the Z-slice that is closest to the identified box top in the x- and y-directions in the height map. In the example height map shown in FIG. 17, the identified box top is resting on the Z = 81.5 cm slice. This also corresponds to the height of the box bottom.

Returning to FIG. 6, having identified the box top and the box bottom, the processor 120 calculates 640 the box height from the box top to the box bottom. The box height is the difference between the respective Z-slice heights of the box top and the box bottom, e.g., 87.1 cm - 81.5 cm = 5.6 cm.

The processor 120 further 650 calculates the length and the width of the box based on the selected box top. For example, having identified the box top, the processor 120 calculates the length and width of the box top. Because the distance data for the box top is taken at an angle and may have noise, the processor 120 may filter the box top data, rotate the box top so it is aligned with an x-axis and a y-axis, and calculate horizontal and vertical profiles of the edges to determine the length and width. For example, the trailing edge of the box (i.e., the edge of the box farthest from the TOF sensor 110) may be blurred, which can make it difficult for the processor 120 to identify the trailing edge without performing additional data processing.

FIG. 8 is a flow diagram showing an example process for calculating the length and width of the box top, according to some embodiments of the present disclosure. In some embodiments, the processor 120 filters the box top data, e.g., the distance data corresponding to at least the points in the distance data that correspond to the identified box top. In some embodiments, the processor 120 filters all of the distance data.

As described with respect to FIG. 3, ambient light in the environment of the TOF sensor 110 can create noise in the distance data. To reduce the effect of noise, a filter, e.g., an integral filter, may be applied to the distance data before the box length and width are calculated. Filtering the noise in this manner may be particularly useful if the TOF sensor 110 captures data in an outdoor environment, due to the noise caused by sunlight.

To filter the distance data, the processor 120 may compute, for each pixel in the distance data, an average pixel value based on pixel values in a region around the pixel. The processor may use a different filter than the filter described with respect to step 320. In particular, the processor 120 may use a smaller filter window than the filter used to identify the Z-planes. For example, the filtered pixel value for a given pixel may be the average value for an 5x5 or 7x7 square of pixels centered on the given pixel. As described with respect to FIG. 3, the processor 120 may perform the filtering on phase measurement data received from TOF sensor 110, e.g., the processor 120 first filters multiple phase measurements (for different frequencies, as described above), and then processes the filtered phase data to determine a distance measurement for each pixel. Alternatively, the processor 120 may filter the distance measurements, e.g., if the pulse return method is used to obtain the distance data.

In some embodiments, the filtering step may be omitted, e.g., if, the TOF sensor 110 is intended for use in an environment with relatively low noise levels, e.g., if the TOF sensor 110 is designed for indoor use only. In some cases, the processor 120 may perform filtering in response to determining that there is a threshold level of sunlight in the environment of the TOF sensor 110. Furthermore, in some embodiments, the processor 120 may perform adaptive filtering based on the type or level of ambient light in the environment of the TOF sensor 110, e.g., using a larger filter window when brighter sunlight is detected, using a larger filter window when a greater frequency distribution is detected in the ambient light, or using a larger filter window when particular frequencies known to interact with the TOF sensor 110 are detected in the ambient light.

The processor 120 extracts 820 a subset of points within the transformed distance data corresponding to the box top, e.g., the connected component selected as the box top at step 740. If the filtering 810 is performed, the processor 120 may calculate a second point cloud based on the filtered data (following the process described in step 330 in FIG. 3), transform the second point cloud (following the process described with respect to steps 340-350 in FIG. 3 and with respect to FIG. 4), and extract the points corresponding to the connected component in the second point cloud. The processor 120 may use the same basis vectors selected during the Z-plane identification stage to transform the point cloud based on the newly filtered data.

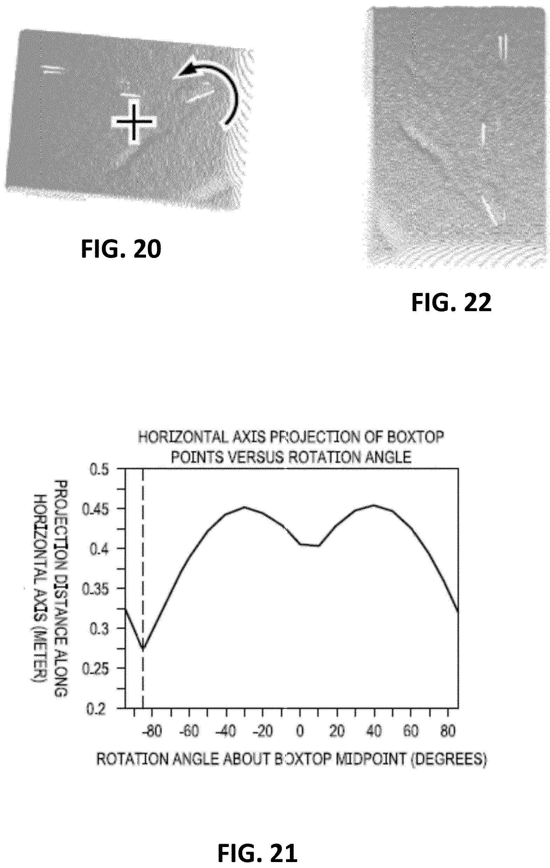

FIG. 20 illustrates a set of points corresponding to a connected component identified as the box top, according to some embodiments of the present disclosure. This set of extracted points is also referred to as a box top subcloud. To simplify processing and understanding of the box top, the processor 120 may determine an angle of rotation for the extracted box top subcloud and rotate 830 the box top subcloud by the angle of rotation so that the edges of the box top are aligned with the x- and y-axes. For example, the processor 120 projects points in the box top subcloud onto the x- and y-axes as a function of subcloud rotation angle about its center. The processor 120 then calculates the sum of the x- and y-projections as a function of rotation angle to generate a profile. FIG. 21 is an example profile of the box top subcloud projected along the x- and y-axes, according to some embodiments of the present disclosure. The processor 120 identifies the azimuthal rotation angle for which the sum of the box top projections is minimized. More particularly, the selected rotation angle minimizes a sum of the projections of the edges of the box top onto a set of axes of the previously determined frame of reference, e.g., the frame of reference of the basis vectors. The processor 120 rotates the box top subcloud through the identified azimuthal angle so that the box top subcloud is axis-aligned. FIG. 22 illustrates an axis-aligned box top rotated based on the profile in FIG. 21, according to some embodiments of the present disclosure.

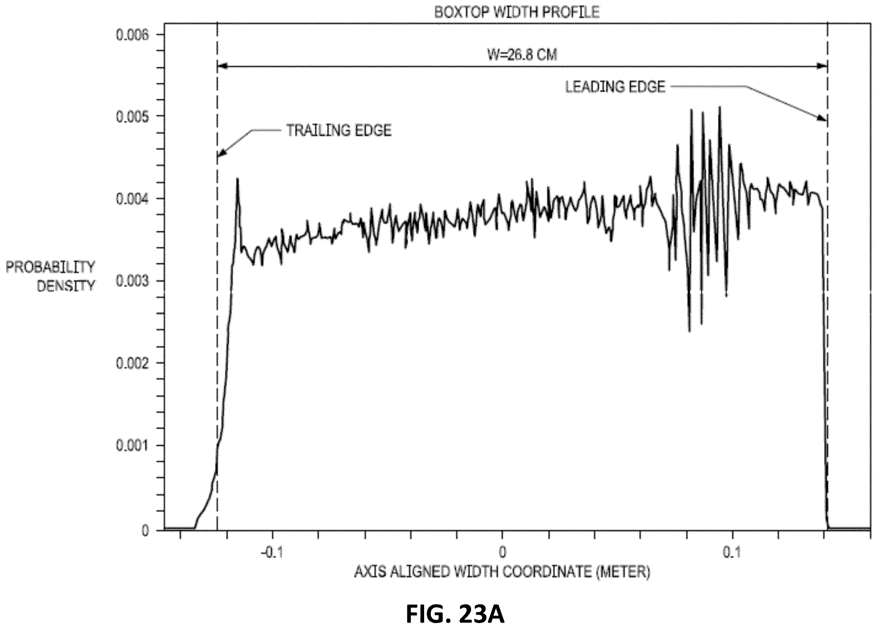

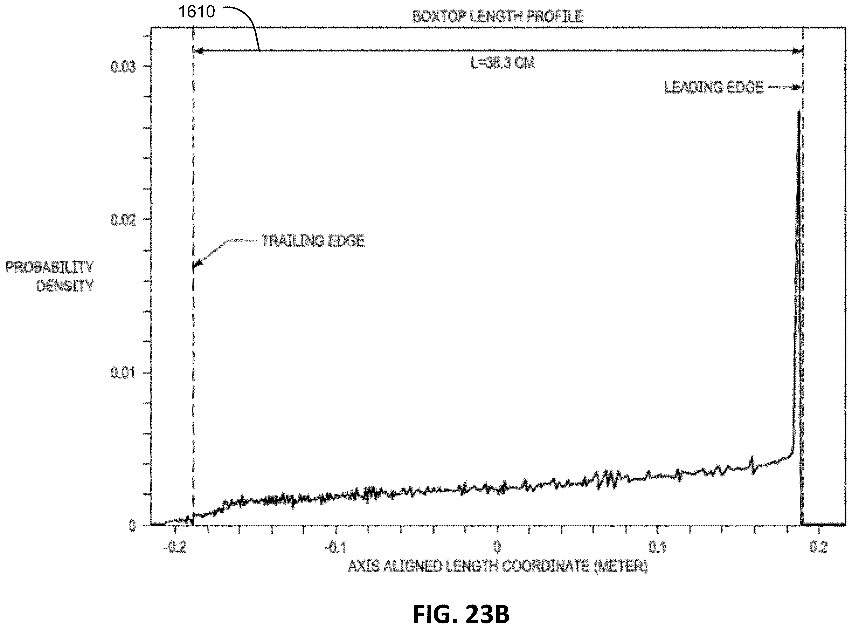

Having rotated the box top subcloud, the processor 120 calculates 840 a width profile and a length profile for the box top. For many TOF sensors, while the leading edges of the box closest to the sensor are sharp and easy for both humans and computers to identify, flying voxels may blur the trailing edges of the box located farther downstream from the TOF sensor 110. This causes the location of the trailing edges to be more ambiguous and difficult to identify from the distance data. The processor 120 generates box top width and length profiles by projecting the points of the rotated box top subcloud onto the horizontal and vertical axes. FIGs. 23A and 23B show example box top width and length profiles, respectively, according to some embodiments of the present disclosure.

The processor 120 identifies 850 the leading edges and trailing edges in the width and length profiles. For example, the processor 120 applies one or more rules to identify the edges from the profiles. The processor 120 may fit lines to each of the profiles' interiors and define a leading edge as a location where the profile equals a set percentage of the linear fit's value, e.g., 40% of the linear fit's value. The processor 120 may define the trailing edge by a location where the profile equals the same percentage or different percentage of the linear fit's value, e.g., a particular value in the range of 25% to 85%. The processor 120 may further apply one or more rules to determine the trailing edge fraction. For example, trailing edge percentage thresholds may vary with the height of the box. Alternatively, percentage thresholds can differ for the shorter and longer of the two box top edges. FIGs. 23A and 23B show examples of the trailing edges and leading edges identified based on the width and length profiles.

The processor 120 calculates 860 the width and length of the box top based on the determined leading edges and trailing edges. In particular, the width is the distance between the leading edge and trailing edge in the width projection, and the length is the distance between the leading edge and trailing edge in the length projection. FIGs. 23A and 23B indicate the width and length, respectively, between the trailing edges and leading edges.

Returning to FIG. 6, the sensor system 100 (e.g., the processor 120 and the display device 140) may display 660 the determined box dimensions to a user. For example, the processor 120 may generate a display for output on the display device 140 that includes a visual representation of the box along with the height, width, and length. For example, the display may show the identified edges and/or dimensions projected onto an image captured by the camera 130, or an image created based on the distance data from the TOF sensor 110. In one embodiment, the processor 120 generates an image of the three-dimensional box defined by the identified leading and trailing edges, the identified box top and box bottom surfaces, and/or the calculated height, width, and length. The processor 120 may also calculate the volume (length x width x height) and output the volume on the display device 140.

The processor 120 may project the image of the three-dimensional box onto a two-dimensional image plane of the camera 130 to generate an overlay image, e.g., an outline overlaying the image of the box. The calculated width, length, and height dimensions may also be reported in the graphical display, either along the edges or in a separate area. A user can view the graphical display in the display device 140 to qualitatively confirm that the sensor system 100 has correctly identified the box and correctly identified the edges and surfaces.

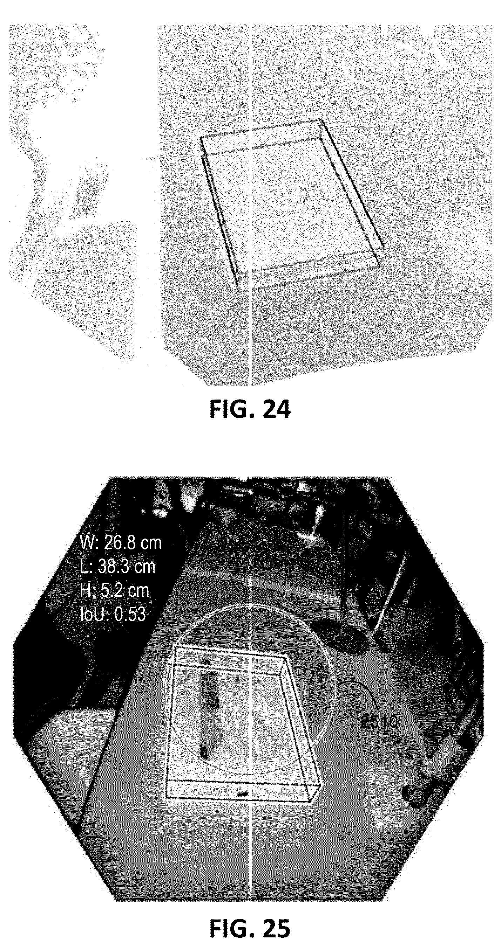

FIG. 24 illustrates identified box edges overlayed on an image obtained based on data from the TOF sensor, according to some embodiments of the present disclosure. The image in FIG. 24 may be an image generated by the processor 120 based on the point cloud generated from the distance data from the TOF sensor 110. FIG. 24 also includes an outline of the box edges superimposed on the point cloud image.

FIG. 25 illustrates identified box edges and determined box dimension overlayed on an image obtained by a camera, according to some embodiments of the present disclosure. In this example, the image may be an IR image obtained by an IR camera. FIG. 24 further includes an outline of the box edges superimposed on the IR image, and displays the calculated width, length, and height for the box in the upper-left of the display. FIG. 24 also displays an intersection over union (IoU) score. In some embodiments, the processor 120 calculates an IoU score that measures an overlap between the box top and a pre-defined circle 2510 appearing in the center of the field of view of the TOF sensor 110. A larger IoU score correlates with a higher-accuracy dimensioning result, and a user may adjust the view of the TOF sensor 110 to obtain a higher IoU score. In some embodiments, the sensor system 100 may set a lower IoU bound for reporting the box dimensions, e.g., the processor 120 displays the box dimensions if the IoU score is greater than 0.40 or another threshold, and displays a request to the user to move the TOF sensor 110 if the IoU score is lower than the threshold. Ensuring that a user is orienting the TOF sensor 110 relative to the box with a sufficiently high IoU can reduce errors in the box dimensions reported by the sensor system 100.

In some embodiments, the sensor system 100 may additionally or alternatively report an intensity indicator that indicates a measured intensity at a particular pixel or across a set of pixels in the distance data collected by the TOF sensor 110 and/or a measured intensity in the corresponding pixel or set of pixels collected by the camera 130. In some cases, if the measured intensity in an area of interest in the image frame 220 is too low, it may be difficult for the processor 120 to find Z-planes, determine the box top dimensions, or perform other processing of the TOF distance data. The processor 120 can analyze the intensity of at least a portion of the sensor system's field of view and report the intensity to the user. Based on the reported intensity, the user may determine whether to adjust the environment, e.g., by changing lighting conditions, by changing the angle of the TOF sensor 110 relative to the box or other area of interest, by moving the box to a different location (e.g., onto a different Z-plane, into another room), etc., in order to increase the intensity. In some embodiments, if the processor 120 determines that the intensity is too low (e.g., the intensity is below a given threshold and/or the processor 120 is having difficulty finding Z-planes or the box, e.g., none of the identified connected components satisfies the rules for identifying the box top), the processor 120 may output an instruction to the user to make a change to the environment, sensor position, or location of the box to increase the intensity.

For example, if the camera 130 is an IR camera, the processor 120 may determine an IR intensity for at least a portion of the camera's field of view, e.g., at or near the center of the image frame of the camera 130. If the camera 130 is a visible light camera, the processor 120 may determine an intensity or brightness of the visible light at or near the center of the image frame. The intensity measurement may be correlated with the reflectivity of the material(s) in a given region, e.g., a reflectivity of a box material. Since a user typically points the TOF sensor 110 at a box, Z-plane, or other area of interest, and may be encouraged to include a box top in the center of the image frame by the IoU (as described above), the center of the image frame of the camera 130 typically corresponds to the box top, other portion of a box, Z-plane, or other area of interest.

As a particular example, the camera 130 captures an image frame with an area corresponding to the image frame 220. The processor 120 may identify, in the image frame captured by the camera 130, an intensity near the center of the image frame, e.g., an intensity at a location corresponding to the pixel 215a in the center of the image frame 220 of the TOF sensor 110, or an average intensity for set of pixels including the center of the image frame. For example, the processor 120 may determine an average intensity for a set of pixels corresponding to the circle 2510 shown in FIG. 25.

<u>Another Example Process for Box Identification and Dimensioning</u>

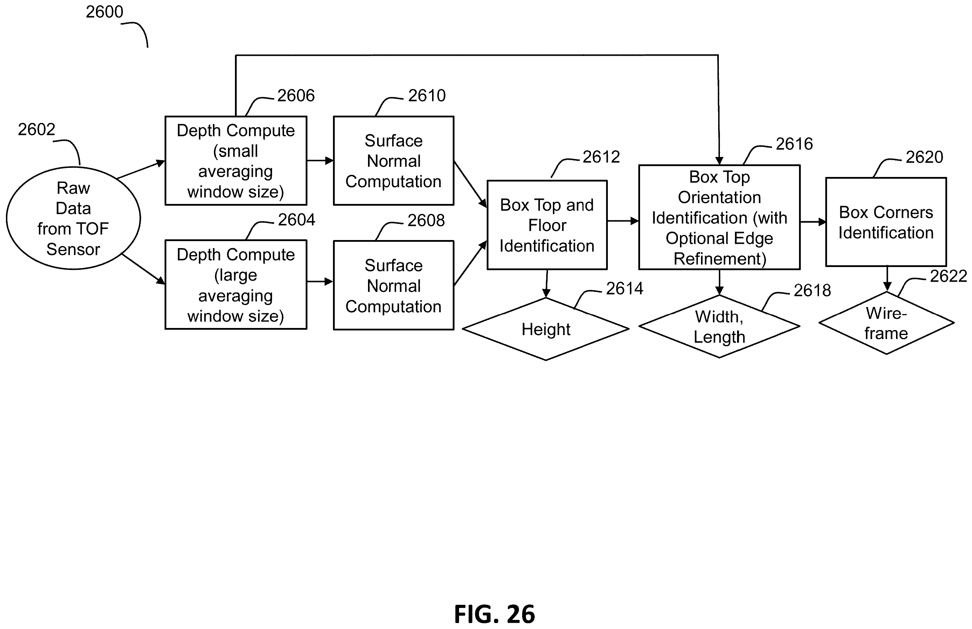

FIG. 26 illustrates an example process 2600 for box dimensioning, which can include other examples for identifying Z-Planes, and performing box dimensioning based on the identified Z-Planes, according to some embodiments of the present disclosure. For example, the various actions of process 2600 can be performed by a processor 120 of the sensor system 100, which may be based on corresponding instructions stored in memory 150.

In process 2600, raw data 2602 can be obtained from the TOF sensor 110 and used in identifying the Z-Plane and/or in steps of box dimensioning before the raw data is converted to distance or depth data. Different averaging filters can be applied to the raw data 2602 to smooth flat surface, which can aid in Z-Plane identification, to sharpen edges, which can allow for more accurately estimating boundaries of the Z-planes (e.g., the identified box top and floor), etc. In some examples, the raw data 2602 can be provided to a first depth compute process 2604 that can include a large averaging window size. In addition, in some examples, the raw data 2602 can also be provided to a second depth compute process 2606 that can include a small averaging window size. The large averaging window size and the small averaging window size can be of sizes such that the large averaging window size is larger than the small averaging window size. In one specific example, the large averaging filter can be 17 x 17 pixels in size and the small averaging filter can be 5 x 5 pixels in size. For example, the larger filter kernel can ensure smoothness of the points in the raw data for more robustly determining the flat surfaces in the scene, such as potential box top and floor. Once this is done, the smaller filter kernel can be used to more robustly estimate the boundaries of box top and floor as the edges can remain relatively sharper.

In process 2600, a surface normal computation process 2608 can be performed for the depth computed data that used the large averaging window size, and a surface normal computation process 2610 can be performed for the depth computed data the used the small averaging window size. The surface normal computation processes 2608 and 2610 can be used to identify the Z-Planes, as described in examples herein. For example, the Z-planes can be identified as a collection of points in the depth computed data having a same surface normal and/or achieving a threshold size (e.g., a threshold number of adjacent points). Once the surface normal are computed, a box top and floor identification process 2612 can be performed based on the fact that box top and floor are parallel to each other to identify potential pairs of box tops and floors. All spurious surfaces can be eliminated using heuristics such as checking the shape of the box top to be rectangular or requiring that box top be contiguous except possibly for small, saturated areas, etc., as described further herein. In some examples, if multiple box tops are identified (i.e. many boxed are in the field of view), the one closest to the camera can be considered. The difference between the distance of box top and floor can yield the height of the box 2614.

In process 2600, a box top orientation identification process 2616 can be performed to determine the boundary of the box top (e.g., box width and length 2618) from the point cloud, which can include selecting the points whose surface normal are relatively aligned with that of the identified box top. An optional edge refinement process can also be performed as part of the box top orientation identification process 2616 to take the raw distance data and adjust the estimated box top boundary to ensure the edge pixel is at the average of its equidistant neighbors. The edge refinement process can ensure the box edges are properly captured and box width and length 2618 are not underestimated due to lens blur or other filtering operations. A box corners identification process 2620 can be performed to identify the pixels that correspond to the box corners so that line segments can be drawn on the 2D image as a wire-frame 2622, as described above and further herein.

<u>Another Example Process for Identifying a Z-Plane</u>

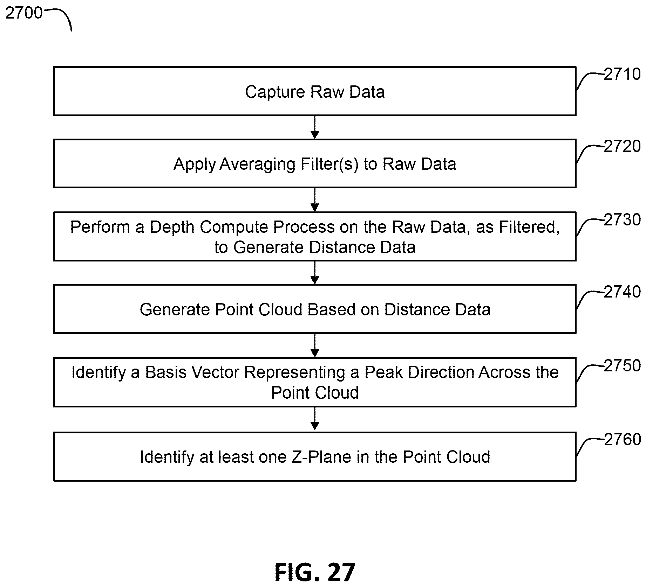

FIG. 27 is a flow diagram showing a process 2700 for identifying a Z-plane in raw TOF data, according to the invention. The TOF sensor 110 captures 2710 raw data of an environment, including various surfaces in the environment. It may be assumed that at least one of the surfaces is a Z-plane. The TOF sensor 110 passes the raw data to the processor 120. In some examples, the camera 130 captures an image of the environment, e.g., at the same time that the TOF sensor 110 captures the raw data, and the camera 130 passes the image to the processor 120.

As described above, FIG. 10 illustrates an example of distance data obtained by a TOF sensor, according to some embodiments of the present disclosure. The distance data can be the same as, or may be derived from, the raw data (e.g., after a depth compute process performed on the raw data).

The processor 120 can applies 2720 averaging filter(s) to the raw data. As described, for example, ambient light in the environment of the TOF sensor 110 can create noise in the raw data. To reduce the effect of noise, one or more filters can be applied for one or more purposes. For example, the processor 120 can apply a first larger size filter to smooth the raw data and improve Z-Plane identification. In some examples, as described further herein, the processor 120 can also apply a smaller size filter to reduce smearing, which can improve boundary estimation for the Z-Plane. In an example, applying the larger size filter may smear the edges, so also separately applying the smaller size filter can help to reduce the smearing of edges. The averaging filters can have the effect of averaging a given pixel value based on pixel values in a region around the pixel. In the specific example described above, a 17 x 17 filter can, for a given pixel, average the pixel values in a 17 x 17 box around the given pixel, and set the given pixel as the computed average value. The averaging filters may include one or more of a box filter, a bilateral filter, a guided filter, an integral filter, etc., as described herein.

In some examples, the processor 120 can filter the raw data using a bilateral filters that preserves edges. It can also computes how "edgy" a pixel is (i.e. whether the pixel is likely to be on an edge), and if it is too edgy, processor 120 can invalidate the pixel, as described further herein. The bilateral filter computational cost and memory requirement can grow quadratically with the filter window size. The error can decrease linearly with the filter window size. To increase the SNR robustness and be computational efficient, edge preservation can be ignored, and box filters, which compute the mean of points in a square window of pixels as described above, can be used. In another example, guided filters, which are computationally efficient and preserve edges, can be used. In another example, integral tables can be used, which have a computational cost that may not scale with filter window size.

In an example, as part of filtering (e.g., based on the larger size filter and/or the smaller size filter), the processor 120 can discard or otherwise consider certain pixels or points invalid (e.g., as not belonging to a collection of adjacent points that define a surface or Z-plane) based on one or more factors. In some examples, the processor 120 can consider a pixel invalid if the active brightness is below a threshold (which can be configurable). In some examples, the processor 120 can consider a pixel invalid if a confidence at the pixel is above a confidence threshold (which can be configurable). In some examples, the processor 120 can consider a pixel invalid if a radial distance is below a minimum or above a maximum (either of which can be configurable).

The processor 120 performs 2730 a depth compute process on the raw data, as filtered, to generate distance data. In some examples, the processor 120 can obtain distance data describing distances between the TOF sensor 110, or a point from which the raw data is measured, and various objects captured in the raw data. In some examples, the processor 120 can discard or otherwise consider certain pixels invalid (e.g., as not belonging to a surface or Z-plane) if the depth computed after applying the larger size filter is not within a threshold percentage (or absolute difference) of the depth computed after applying the smaller size filter (where the threshold can be configurable).

The processor 120 generates 2740 a point cloud based on the distance data and the pixel ray directions 215. For example, processor 120 can generate the point cloud in a frame of reference of the TOF sensor 110. For example, for each individual pixel, the processor 120 multiplies the ray direction 215 for the pixel by the measurement distance to the surface for that pixel, e.g., the measurement distance shown in FIG. 10. The processor 120 may retrieve the ray directions 215 from the memory 150.

The processor 120 identifies 2750 a basis vector representing a peak direction across the point cloud. For example, processor 120 can identify the basis vector for a frame of reference of a corresponding surface in the environment, also referred to as a "world" frame of reference. For example, processor 120 can identify the basis vector as described in reference to actions 410, 420, 430, and 440 of FIG. 4, e.g., based on the surface normals.

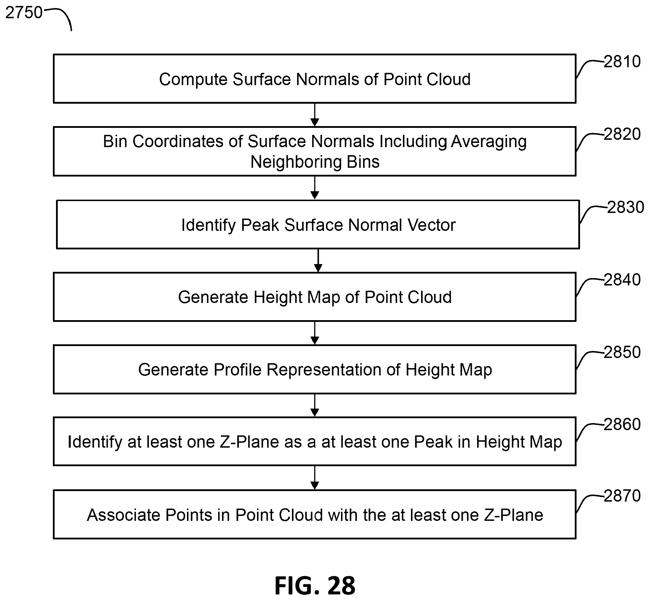

The processor 120 identifies 2760 at least one Z-plane in the point cloud, where the at least one Z-plane can represent at least one surface. FIG. 28 is a flow diagram showing an example process for identifying a Z-plane in a point cloud, according to some embodiments of the present disclosure. In some examples, from the three-dimensional point cloud (e.g., the point cloud as filtered using one or more of the described filters), the processor 120 can compute 2810 surface normal vectors (also referred to as surface normals) for the points within the point cloud. To compute the surface normal for a given point, the processor 120 may fit a plane to a set of points in a region around the individual point, and the processor 120 then computes the surface normal to the fitted plane. The processor 120 can identify the Z-plane as a collection of adjacent points having the same surface normal estimate (and/or achieving a threshold size for surfaces). For flat surfaces (e.g., floors, box surfaces, walls), the surface normals associated with the point cloud are fairly uniform, with some noise variation. As noted above, the filtering 2720 the raw data can reduce the noise variation in the surface normals.

Having computed the surface normals, the processor 120 can bin 2820 coordinates of the surface normals including averaging neighboring bins. This binning results a two-dimensional distribution. The bins may be represented visually by a histogram, e.g., the two-dimensional histogram that bins angular coordinates of the surface normals shown in FIG. 13, or the two-dimensional histogram that bins the two coordinates out of the three coordinates of surface normal vectors. The two-dimensional histogram shown in FIG. 13 has a strong peak 1310 (represented by the dark shading) corresponding to the Z-plane direction vector in the frame of the TOF sensor 110, as described. The processor 120 can identify 2830 the peak coordinates, e.g., the peak angles in the two-dimensional distribution of the binned coordinates.

The processor 120 can generate 2840 a height map from the point cloud. For example, the processor 120 distributes the points the point cloud into square "chimneys," and subsequently selects a representative height for each chimney. Each chimney may be a shape of the same size, e.g., a $(0.75 \text{ cm})^2$ square. Other sizes or shapes may be used to construct the height map. The representative height may be, for example, the top point (maximum height) of the chimney, an average height, a median height, or another height selected or computed from the heights of the points falling within the chimney. Reducing the three-dimensional point cloud down to a two-dimensional height map simplifies data processing and increases computation speed. An example is shown in FIG. 15, as described above. Another example of generating a height map is to take the inner product of each point in the point cloud, represented as a vector, with the identified basis vector from the peak of the histogram. The result of the inner product is a measure of height, thereby corresponding to a height map value for each point, in a reference frame of the camera.

The processor 120 can generate 2850 a profile representation of the height map. For example, the processor 120 integrates the height map over the x- and y-directions to obtain a Z-profile of the height map. This profile represents the probability density of heights within the height map. Peaks within the profile correspond to various flat surfaces, i.e., surfaces that are orthogonal to the first basis vector. An example is shown in FIG. 16, as described above.

The processor 120 can identify 2860 at least one Z-plane as at least one peak in the profile representation of the height map. For example, for each portion of the Z-profile where the probability density falls above a given threshold (e.g., 0.01), the processor 120 can identify a Z-plane. In some embodiments, the processor 120 applies one or more other rules or heuristics to the Z-profile to identify the Z-planes, e.g., to remove spurious noise peaks while retaining genuine weak signals, such as the floor peak. For example, the processor 120 may identify peaks having at least a threshold number of associated points, or peaks in which the heights fall within a given range of each other.

The processor 120 may select a particular height point within a given peak (e.g., a highest point or a center point) as the Z-plane height for that peak. In some embodiments, the processor 120 selects the lowest Z-value peak as the height of the base Z-plane. The processor 120 may set the height of the base Z-plane to zero, and determine the heights of the other Z-planes based on their height relative to the base Z-plane. For example, the processor 120 sets the height of the floor peak 1610 as 0, and the processor 120 determines that the chair peak 1620 has a height of 0.569 meters, the table peak 1630 has a height of 0.815 meters, and the box top peak 1640 has a height of 0.871 meters.

Having identified the at least one Z-plane and its associated height, the processor 120 can associate 2870 various points in the point cloud with the at least one identified Z-plane. For example, the processor 120 may associate a particular point in the point cloud with an identified Z-plane if the height of the point is within a height range of the identified Z-plane. For example, if the height of a particular point is within twice a peak's FWHM (full width at half maximum), the point is associated with the Z-plane corresponding to the peak. Each peak of the at least one peak can indicate a collection of adjacent points in the point cloud having a same surface normal estimate, and the collection of adjacent points can achieve a threshold size. In other examples, other ranges around a Z-plane height are used to associate points in the point cloud to Z-planes. An example is shown in FIG. 17, as described above.

The transformed point cloud and identified Z-planes can be used for various further processing on the point cloud data, as described above and further herein.

## Another Example Process for Box Dimensioning

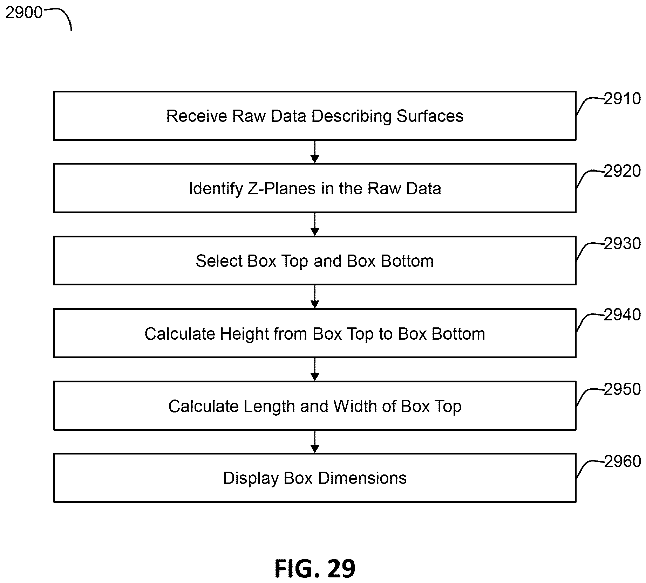

FIG. 29 is a flow diagram showing a process 2900 for determining and outputting box dimension based on TOF data, according to some embodiments of the present disclosure. A sensor system, such as the sensor system 100, can receive 2910 raw data describing various surfaces in the environment of the sensor system 100. For example, as described with respect to steps 2710-2740 in FIG. 27, the TOF sensor 110 captures raw data, the processor 120 filters the raw data, the processor 120 performs a depth compute on the raw data to generate distance data, and the processor 120 generates a point cloud based on the distance data.

For the box dimensioning process, the processor 120 may assume that at least a portion of the surfaces in the environment of the TOF sensor 110 correspond to a box to be measured. Several additional assumptions may be made about the box being measured. Such assumptions can improve the speed and accuracy of the box dimensioning process, particularly in applications where fast detection and measuring of the box are important, e.g., if box dimensions are calculated provided to a user in real or near-real time as the user points the TOF sensor 110 at a box. These assumptions may include that the angles between adjacent surfaces of the box are reasonably close to 90° (e.g., between 85° and 95°, or within some other range); that the box is located within a particular distance of the TOF sensor 110 (e.g., within 3 meters or within 5 meters); that each box dimension is within a particular range (e.g., at least 3 centimeters, or at least 10 centimeters; no more than 2 meters, or no more than 3 meters); that the box is closed; that the top face of the box is visible to the TOF sensor 110; and that the box rests on a flat, horizontal surface (i.e., a Z-plane) that is also visible to the TOF sensor 110.

It should be understood that, in some embodiments, one or more of these assumptions may be relaxed or removed. For example, the range between the sensor and box and the minimum and maximum box dimensions are merely exemplary, and in other embodiments, different ranges and dimensions may be used. In some embodiments, the ranges may vary on the intended uses or target users of the sensor system 100. For example, if the sensor system 100 is used to measuring boxes being loaded into a moving truck (e.g., including wardrobe boxes and boxed furniture), greater distance ranges and greater box dimensions may be used. In some embodiments, a user may be able to input a distance range and/or maximum and minimum box dimensions.

The processor 120 can identify 2920 Z-planes in the raw data, as described with respect to action 2760 of FIG. 27 and in greater detail with respect to FIG. 28.

As noted with respect to FIGs. 17 and 28, each of the Z-planes may be represented as a Z-slice of the height map data. The processor 120 can select 2930 a surface corresponding to the box top and a surface corresponding to the box bottom or ground based on the height map data. For example, the processor 120 identifies one of the Z-slices as containing the box top, and another of the Z-slices as a surface on which the box is resting (e.g., the floor or a table top or a pallet top), which corresponds to the box bottom.

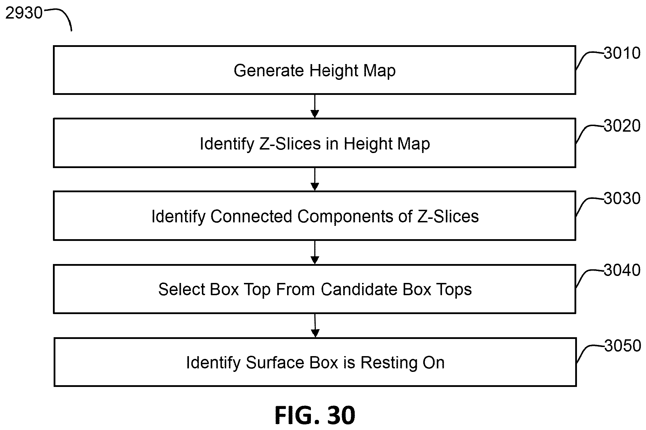

FIG. 30 is a flow diagram showing an example process for identifying the box top and the box bottom, according to some embodiments of the present disclosure. The processor 120 can generate 3010 a height map based on the distance data. For example, the processor 120 may generate the height map as described with respect to action 2840 of FIG. 28. The processor 120 can then identify 3020 Z-slices in the height map. For example, the processor 120 generates a profile representation of the height map, identifies Z-planes as peaks in the profile representation of the height map, and associates various points in the distance data (e.g., in the point cloud) with the Z-planes, as described with respect to steps 2850-2870 of FIG. 28. As noted above, each set of points associated with a particular Z-plane is referred to as a Z-slice.

The processor 120 can identify 3030 connected components within at least some of the Z-slices. Each of the connected components may be a candidate box top. To identify a connected component, the processor 120 finds clusters of nearby or connecting points within a Z-slice. The processor 120 may identify a connected component by finding sets of pixels in a Z-slice that may be reached by moving across the Z-slice, e.g., pixels that are within a threshold distance of each other. For example, the processor 120 may select a particular pixel in a Z-slice and recursively add neighboring pixels that are also in the Z-slice to a connected component. Each connected component has a respective height along the Z-axis in the frame of reference of the basis vectors; the height corresponds to the height of the Z-slice. Examples are shown in FIGs. 18A-18B above.

In some embodiments, prior to identifying the connected components in the Z-slices, the processor 120 may apply one or more rules to remove one or more Z-slices from consideration as the box top. For example, the processor 120 may eliminate the lowest or base Z-slice as potentially containing the box top, since it is assumed that the box top is above the lowest surface. The processor 120 may also remove a Z-slice that does not lie sufficiently close within the height map (in the x- and y-direction) to some other, lower Z-slice (i.e., a potential surface for the box to be resting on). For example, for the Z-plane slices shown in FIG. 17, the processor 120 may remove the Z = 56.9 cm slice from consideration because it is not sufficiently close to the only Z-slice that is lower than it, the Z = 0 cm slice. By contrast, the 56.9 cm Z-slice is sufficiently close to the Z = 81.5 cm Z-slice that the Z = 81.5 cm Z-slice cannot be eliminated as potentially containing a box top, with the 56.9 cm Z-slice being the surface holding the box bottom.

Having identified the connected components representing candidate box tops, the processor 120 can selects 3040 one of the connected components as the box top. The processor 120 may apply various rules to the connected components to identify the box top. For example, the processor 120 may remove connected components that are very small (e.g., having a width and/or length below the threshold minimum box dimensions described above). The processor 120 may remove connected components that are highly elongated or non-compact (e.g., the connected component has a large perimeter compared to the square root of its area). The processor 120 may remove connected components for which a box bottom (i.e., the surface on which the box is resting) cannot be derived from the height map, e.g., because no other connected component or Z-slice is sufficiently close to the connected component in the height map in the x- and y-direction. The processor 120 may remove connected components that are too close to the edges of the capture from the TOF sensor 110. The processor 120 may remove connected components outside of a threshold distance from an optical center of the capture of the TOF sensor 110. The processor 120 may remove connected components that have at least a threshold number of gaps (e.g., pixels within the boundary of connected components that are not considered part of the box top). The processor 120 may remove connected components that have over a threshold difference in length between opposite edges, less than a minimum distance between corners or box extrema, over a maximum cosine of angles, etc. An example is shown in FIGs. 19A and 19B, as described above.

While several example rules for identifying a box top are discussed above, the processor 120 may apply additional, fewer, or different rules to the connected components to identify the box top in different embodiments. In some embodiments, if multiple candidates pass each of the rules described above, the processor 120 may use an additional rule or rules for choosing between the possible box tops. For example, the processor 120 may select the candidate box top that is closest to the TOF sensor 110.

Having identified the box top, the processor 120 can identify 3050 the surface on which the box is resting, and may select this surface as corresponding to the box bottom. For example, the processor 120 selects a Z-slice that has a lower height than the box top and that is closest in lateral range to the box top in the height map, e.g., the Z-slice that is closest to the identified box top in the x- and y-directions in the height map. In the example height map shown in FIG. 17, the identified box top is resting on the Z = 81.5 cm slice. This also corresponds to the height of the box bottom.

Returning to FIG. 29, having identified the box top and the box bottom, the processor 120 can calculate 2940 the box height from the box top to the box bottom. The box height is the difference between the respective Z-slice heights of the box top and the box bottom, e.g., 87.1 cm - 81.5 cm = 5.6 cm.

The processor 120 can further calculate 2950 the length and the width of the box based on the selected box top. For example, having identified the box top, the processor 120 calculates the length and width of the box top. Because the distance data for the box top is taken at an angle and may have noise, the processor 120 may filter the box top data, rotate the box top so it is aligned with an x-axis and a y-axis, and calculate horizontal and vertical profiles of the edges to determine the length and width. For example, the trailing edge of the box (i.e., the edge of the box farthest from the TOF sensor 110) may be blurred, which can make it difficult for the processor 120 to identify the trailing edge without performing additional data processing. In some examples, though described terms of dimensioning a box top herein, the processor 120 can similarly calculate length and width and height, etc., of any identified Z-plane, regardless of whether it is a box top or box bottom, ground plane, wall, etc.

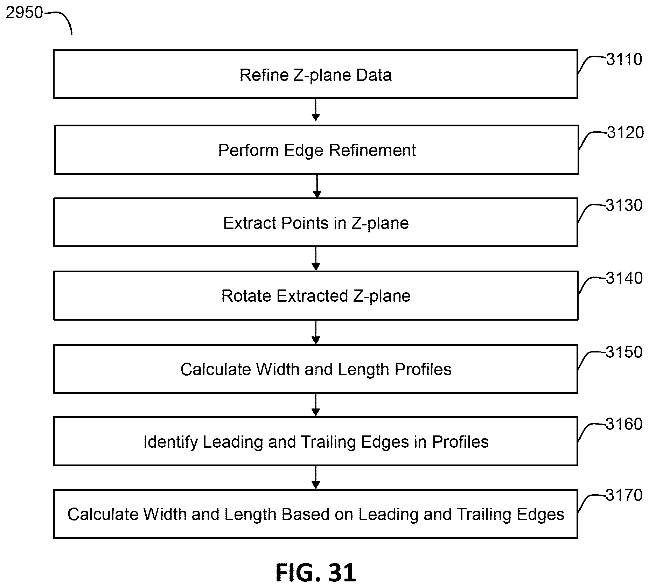

FIG. 31 is a flow diagram showing an example process for calculating the length and width of the box top, or other Z-plane, according to some embodiments of the present disclosure. In some embodiments, the processor 120 can refine 3110 the Z-plane data, e.g., the distance data corresponding to at least the points in the distance data that correspond to the identified Z-plane. In some embodiments, the processor 120 refines all of the distance data. As described with respect to FIG. 27, ambient light in the environment of the TOF sensor 110 can create noise in the distance data. To reduce the effect of noise, one or more filters, e.g., a large size filter and a small size filter, may be applied to the distance data before the length and width are calculated to respectively smooth surfaces and/or sharpen edges. Filtering the noise in this manner may be particularly useful if the TOF sensor 110 captures data in an outdoor environment, due to the noise caused by sunlight.

To filter the distance data, the processor 120 may compute, for each pixel in the distance data, an average pixel value based on pixel values in a region around the pixel. The processor may use a different filter than the filter described with respect to action 2720. In particular, the processor 120 may use a smaller filter window than the filter used to identify the Z-planes. For example, the filtered pixel value for a given pixel may be the average value for an 5x5 or 7x7 square of pixels centered on the given pixel.

In some cases, the processor 120 may perform filtering in response to determining that there is a threshold level of sunlight in the environment of the TOF sensor 110. Furthermore, in some embodiments, the processor 120 may perform adaptive filtering based on the type or level of ambient light in the environment of the TOF sensor 110, e.g., using a larger filter window when brighter sunlight is detected, using a larger filter window when a greater frequency distribution is detected in the ambient light, or using a larger filter window when particular frequencies known to interact with the TOF sensor 110 are detected in the ambient light.

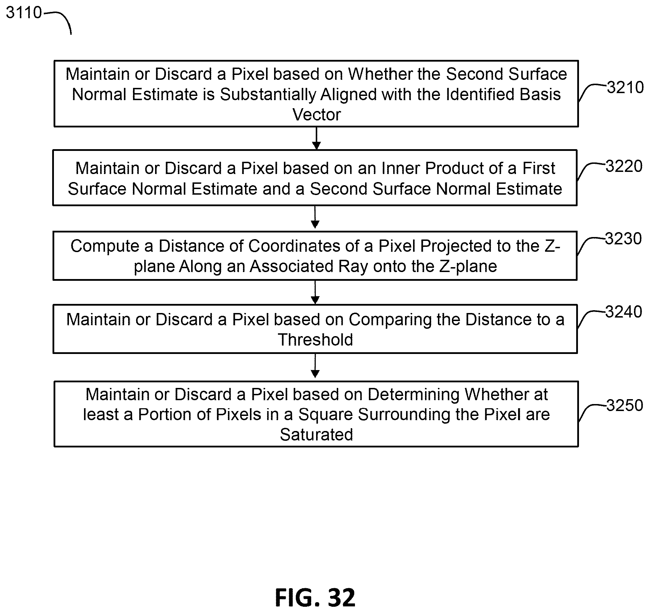

FIG. 32 is a flow diagram showing an example process for refining the box top or other Z-plane data, according to some embodiments of the present disclosure. In some embodiments, once the Z-plane is crudely identified, the processor 120 can refine the data to determine which points or pixels are to be considered part of the Z-plane. For example, refining the data can consider each pixel according to one or more constraints or parameters to determine whether the pixel is to be considered part of the Z-plane, though the pixel itself may exhibit properties that may otherwise indicate the pixel as not being part of the Z-plane.

The processor 120 can maintain or discard 3210 a pixel based on whether the second surface normal estimate is substantially aligned with the identified basis vector or not. For example, where the second surface normal estimate for the pixel (e.g., as computed using the smaller size filter) is substantially aligned with the identified basis vector, the processor 120 can maintain the pixel in the collection of pixels defining the Z-plane. Otherwise, the processor 120 can discard the pixel from the collection of pixels defining the Z-plane.

The processor 120 can maintain or discard 3220 a pixel based on an inner product of a first surface normal estimate and a second surface normal estimate. For example, for at least pixels or points in the point cloud that are determined to be candidates for edge points, the processor 120 can compute, for a given pixel, the inner product of the first surface normal computed for the pixel (based on the larger size filter) and the second surface normal computed for the pixel (based on the smaller size filter). In some examples, the first surface normal can correspond to that computed in the first surface normal computation process 2608, and the second surface normal can correspond to that computed in the second surface normal computation 2610 (and/or as similarly described at 2810 in FIG. 28). If the inner product is within a threshold of 1, this can indicate that the pixel belongs to the Z-plane, and the processor 120 can retain the pixel as part of the determined Z-plane. If the inner product is not within the threshold of 1, this can indicate that the pixel does not belong to the Z-plane, and the processor 120 can discard the pixel from the determined Z-plane. The threshold can be configurable to adjust for certain conditions, as described above, such as based on a detected type or level of ambient light.

As another factor for refining the Z-plane (e.g., in addition or alternatively to action 3220), the processor 120 can compute 3230 a distance of coordinates of a pixel projected to the Z-plane along an associated ray onto the Z-plane, and can maintain or discard 3240 the pixel based on comparing the distance to a threshold. For example, if the distance along the ray to the crudely determined Z-plane is within the threshold, this can indicate that the pixel belongs to the Z-plane, and the processor 120 can retain the pixel as part of the determined Z-plane. If the distance is not within the threshold, this can indicate that the pixel does not belong to the Z-plane, and the processor 120 can discard the pixel from the determined Z-plane. In one example, the processor 120 can projecting, for a point in the collection of adjacent points, the point to the at least one Z-plane along an associated ray, compute a distance of coordinates of the point corresponding to the projecting, maintain the point in the collection of adjacent points where the distance is within a threshold distance, or discard the point from the collection of adjacent points where the distance is not within the threshold distance. In one example, the distance can correspond to a height of the box, such as that computed at action 2940 in FIG. 29). The threshold distance can be configurable to adjust for certain conditions, as described above, such as based on a detected type or level of ambient light. In another example, the processor 120 can discard the point from the collection of adjacent points based on determining that the distance is not within a height of the Z-plane.

As another factor for refining the Z-plane (e.g., in addition or alternatively to actions 3220, 3230, and/or 3240), the processor 120 can maintain or discard 3250 a pixel based on determining whether at least a portion of pixels in a square (or matrix) surrounding the pixel are saturated. For example, the square can be of various sizes, such as 3 x 3, 5 x 5, 7 x 7, 9 x 9, etc., and the processor 120 can determine whether a certain number or percentage of the pixels in the square are saturated (or unsaturated). In some examples, processor 120 can determine the pixel values based on the raw data. For example, the processor 120 can consider a pixel saturated if it has a pixel value that achieves a threshold (e.g., 32767 for a 16-bit pixel). For example, if a certain number of pixels in the square are valid (e.g., unsaturated), this can indicate that the pixel belongs to the Z-plane, and the processor 120 can retain the pixel as part of the determined Z-plane. If a certain number of pixels in the square are invalid (e.g., saturated), this can indicate that the pixel does not belong to the Z-plane, and the processor 120 can discard the pixel from the determined Z-plane. The threshold pixel value for determining saturation, and/or the number of pixels having the threshold pixel value for the subject pixel to be considered as not part of the Z-plane (or the number of pixels not having the threshold pixel value for the subject pixel to be considered as part of the Z-plane) can be configurable to adjust for certain conditions, as described above, such as based on a detected type or level of ambient light.

For example, the TOF sensor 110 can collect the set of raw capture data as an image having a number of rows and a number columns. If the value at a pixel indicates saturation (e.g., a value of at least 32767 for a 16-bit pixel), the capacitor may have been saturated and the pixel value may not be meaningful. When filtering the data, if a pixel has at least a threshold number of saturated pixels around it (the threshold may be configurable), the processor 120 can exclude the pixel from or during filtering. In one example, the processor 120 can replace the pixel value $p_{i_y,i_x}$ at row $i_y$ and column $i_x$ with a weighted average:

$$\frac{\sum_{i'_y,i'_x} w_{i'_y,i'_x} p_{i'_y,i'_x}}{\sum_{i'_y,i'_x} w_{i'_y,i'_x}}$$

where the weights $w_{i'_y,i'_x}$ are nonzero only for non-saturated pixels near the pixel at row $i_y$ and column $i_x$.

In one specific example, if a pixel is maintained through all of actions 3220, 3240, and 3250, the processor 120 can retain the pixel as part of the Z-plane. In another example, the processor 120 can retain the pixel as part of the Z-plane if a pixel is maintained through one or more, or substantially any combination of, actions 3220, 3240, and 3250.

Returning to FIG. 31, the process 120 can optionally perform 3120 edge refinement to refine the edge pixels considered as part of the box top and/or other surfaces. As part of this process, for example, it can be assumed that a pixel receives equal contribution from foreground and background for its pixel value. As such, for example, the processor 120 can confirm, based on the raw data, an edge pixel's raw value (or a linear transformation thereof) is the midpoint of the same thing for a number of pixels in one direction from the edge pixel and in an opposite direction from the edge pixel (e.g., the midpoint of the same thing for a number of pixels to the left of the edge pixel and the same number of pixels to the right of the edge pixel, or above and below, etc.).

The processor 120 can extract 3130 a subset of points within the transformed distance data corresponding to the Z-plane, e.g., the connected component selected as the Z-plane at action 3030.

As described, FIG. 20 illustrates a set of points corresponding to a connected component identified as the Z-plane, according to some embodiments of the present disclosure. This set of extracted points is also referred to as a Z-plane subcloud. To simplify processing and understanding of the Z-plane, the processor 120 may determine an angle of rotation for the extracted Z-plane subcloud and rotate 3140 the Z-plane subcloud by the angle of rotation so that the edges of the Z-plane are aligned with the x- and y-axes. For example, the processor 120 projects points in the Z-plane subcloud onto the x- and y-axes as a function of subcloud rotation angle about its center.

Having rotated the Z-plane subcloud, the processor 120 can calculate 3150 a width profile and a length profile for the Z-plane. For many TOF sensors, while the leading edges of the box closest to the sensor are sharp and easy for both humans and computers to identify, flying voxels may blur the trailing edges of the box located farther downstream from the TOF sensor 110. This causes the location of the trailing edges to be more ambiguous and difficult to identify from the distance data. The processor 120 generates Z-plane width and length profiles by projecting the points of the rotated Z-plane subcloud onto the horizontal and vertical axes. FIGs. 23A and 23B show example Z-plane width and length profiles, respectively, according to some embodiments of the present disclosure.

The processor 120 can identify 3160 the leading edges and trailing edges in the width and length profiles. For example, the processor 120 applies one or more rules to identify the edges from the profiles. The processor 120 may fit lines to each of the profiles' interiors and define a leading edge as a location where the profile equals a set percentage of the linear fit's value, e.g., 40% of the linear fit's value. The processor 120 may define the trailing edge by a location where the profile equals the same percentage or different percentage of the linear fit's value, e.g., a particular value in the range of 25% to 85%. The processor 120 may further apply one or more rules to determine the trailing edge fraction. For example, trailing edge percentage thresholds may vary with the height of the box. Alternatively, percentage thresholds can differ for the shorter and longer of the two Z-plane edges. FIGs. 23A and 23B show examples of the trailing edges and leading edges identified based on the width and length profiles.

The processor 120 can calculate 3170 the width and length of the box top, or other Z-plane, based on the determined leading edges and trailing edges. In particular, the width is the distance between the leading edge and trailing edge in the width projection, and the length is the distance between the leading edge and trailing edge in the length projection. FIGs. 23A and 23B indicate the width and length, respectively, between the trailing edges and leading edges.

Returning to FIG. 29, the sensor system 100 (e.g., the processor 120 and the display device 140) may display 2960 the determined box dimensions to a user. For example, the processor 120 may generate a display for output on the display device 140 that includes a visual representation of the box along with the height, width, and length. For example, the display may show the identified edges and/or dimensions projected onto an image captured by the camera 130, or an image created based on the distance data from the TOF sensor 110. In one embodiment, the processor 120 generates an image of the three-dimensional box defined by the identified leading and trailing edges, the identified box top and box bottom surfaces, and/or the calculated height, width, and length. The processor 120 may also calculate the volume (length x width x height) and output the volume on the display device 140.

The processor 120 may project the image of the three-dimensional box onto a two-dimensional image plane of the camera 130 to generate an overlay image, e.g., an outline overlaying the image of the box, e.g., a wire-frame. The calculated width, length, and height dimensions may also be reported in the graphical display, either along the edges or in a separate area. A user can view the graphical display in the display device 140 to qualitatively confirm that the sensor system 100 has correctly identified the box and correctly identified the edges and surfaces. Examples are illustrated in FIGs. 24 and 25, as described above.

Other Implementation Notes, Variations, and Applications

In one example embodiment, any number of electrical circuits of the figures may be implemented on a board of an associated electronic device. The board can be a general circuit board that can hold various components of the internal electronic system of the electronic device and, further, provide connectors for other peripherals. More specifically, the board can provide the electrical connections by which the other components of the system can communicate electrically. Any suitable processors (inclusive of digital signal processors, microprocessors, supporting chipsets, etc.), computer-readable non-transitory memory elements, etc. can be suitably coupled to the board based on particular configuration needs, processing demands, computer designs, etc. Other components such as external storage, additional sensors, controllers for audio/video display, and peripheral devices may be attached to the board as plug-in cards, via cables, or integrated into the board itself. In various embodiments, the functionalities described herein may be implemented in emulation form as software or firmware running within one or more configurable (e.g., programmable) elements arranged in a structure that supports these functions. The software or firmware providing the emulation may be provided on non-transitory computer-readable storage medium comprising instructions to allow a processor to carry out those functionalities.

**Claims**

1. A method for identifying Z-planes, comprising:

   obtaining (2710) raw data from a time-of-flight, TOF, sensor indicating distances between the TOF sensor and a plurality of surfaces;
   applying (2720) an averaging filter to the raw data to smooth the raw data for increasing signal-to-noise ratio, SNR, of surfaces of the plurality of surfaces;
   performing (2730) a depth compute process on the raw data, as filtered, to generate distance data;
   generating (2740) a point cloud based on the distance data, the point cloud in a frame of reference of the sensor;
   identifying (2750) basis vectors for a frame of reference of the surfaces in the environment, wherein a first basis vector corresponds to the direction perpendicular to the Z-planes in the environment observed by the TOF sensor, a second and third basis vectors are each orthogonal to the first basis vector, and the basis vectors define a "world" coordinate system, i.e., a coordinate system in which the Z-planes are horizontal, and wherein the first basis vector is defined as the direction vector corresponding to the peak direction of surface normal vectors across the point cloud; and
   identifying (2760), in the point cloud, at least one Z-plane representing at least one surface of the plurality of surfaces, wherein a Z-plane is a plane in a real-world environment that is parallel to the ground in a particular environment.

2. The method of claim 1, wherein identifying the at least one Z-plane includes:

   generating (2840) a height map of the point cloud;
   generating (2850) a profile representation of the height map; and
   identifying (2860) the at least one Z-plane respectively corresponding to at least one peak in the profile representation, wherein each peak of the at least one peak indicates a collection of adjacent points in the point cloud having a same surface normal estimate, and wherein the collection achieves a threshold size.

3. The method of claim 2, further comprising associating a first one of the at least one Z-plane as a box top and a second one of the at least one Z-planes as a ground.

4. The method of claim 3, further comprising:

   computing a height of a box based on a position of the box top with respect to the ground; and
   computing a length and a width of the box based on the box top.

5. The method of any of claims 2 to 4, further comprising:

   applying a second averaging filter to the raw data, wherein the second averaging filter is of a smaller size than the averaging filter;
   computing second surface normal estimates based on the raw data, as filtered using the second averaging filter; and
   refining, based on the second surface normal estimates, which points are included in the collection of adjacent points indicated by the at least one peak corresponding to the at least one Z-plane.

6. The method of claim 5, wherein refining which points are included in the collection of adjacent points includes:

   maintaining the point in the collection of adjacent points where the second surface normal estimate is substantially aligned with the identified basis vector; and
   discarding the point from the collection of adjacent points where the second surface normal estimate is not substantially aligned with the identified basis vector.

7. The method of claim 5, wherein refining which points are included in the collection of adjacent points includes:

   maintaining a first set of points in the collection of adjacent points having an inner product of a surface normal estimate of the surface normal estimates and a second surface normal estimate of the second surface normal estimates within a threshold of 1; and
   discarding a second set of points from the collection of adjacent points having an inner product of a surface normal estimate of the surface normal estimates and a second surface normal estimate of the second surface normal estimates not within a threshold of 1.

8. The method of claim 5, wherein refining which points are included in the collection of adjacent points includes discarding a second set of points from the collection of adjacent points based on determining at least a portion of points in a matrix surrounding each point in the second set of points are saturated, where a point in the matrix is considered saturated when a pixel value of a point exceeds a threshold pixel value.

9. The method of claim 5, wherein refining which points are included in the collection of adjacent points includes:

    projecting, for a point in the collection of adjacent points, the point to the at least one Z-plane along an associated ray;
    computing a distance of coordinates of the point corresponding to the projecting;
    maintaining the point in the collection of adjacent points where the distance is within a threshold distance; and
    discarding the point from the collection of adjacent points where the distance is not within the threshold distance.

10. The method of any of claims 5 to 9, further comprising associating a point in the point cloud with the at least one Z-plane based on determining that a height of the point is within a height range associated with the at least one Z-plane.

11. The method of any of claims 2 to 10, further comprising performing edge refinement on an edge portion of the collection of adjacent points determined to represent an edge of the Z-plane including determining the edge portion of the collection of adjacent points representing an edge by verifying that a raw value for the edge portion of the collection of adjacent points is a midpoint value for a number of points in a first direction and the number of points in a direction opposite the first direction.

12. An imaging system comprising:

    a time-of-flight, TOF, sensor configured to obtain raw data indicating distances between the TOF sensor and a plurality of surfaces in an environment of the TOF sensor; and
    a processor configured to perform the method of any of the preceding claims.

13. The imaging system of claim 12, wherein the TOF depth sensor comprises:

    a) a light source to illuminate the environment of the TOF depth sensor and an image sensor to sense reflected light; and/or
    b) an image frame, and the raw data is arranged in a plurality of pixels within the image frame, wherein optionally an individual pixel comprises a distance to one of the plurality of surfaces in the environment of the TOF depth sensor, and the individual pixel has an associated ray direction describing a direction from the TOF depth sensor to the surface,
    and wherein further optionally, to generate the point cloud, the processor multiplies the ray direction for the individual pixel by the distance to the one of the plurality of surfaces for the individual pixel.

14. The imaging system of claim 12 or 13, further comprising a camera to capture an image of the environment of the TOF depth sensor, and further optionally comprising a display screen, the processor to display, on the display screen, the image captured by the camera and a visual indication of the identified Z-plane.

15. The imaging system of any of claims 12 to 14, further comprising a light sensor for detecting sunlight in the environment of the TOF depth sensor, wherein the processor applies the filter to the raw data in response to detecting at least a threshold level of sunlight.


**Patentansprüche**

1. Verfahren zum Identifizieren von Z-Ebenen, umfassend:

    Erhalten (2710) von Rohdaten aus einem Flugzeit-, TOF, -Sensor, der Abstände zwischen dem TOF-Sensor und einer Vielzahl von Oberflächen anzeigt;
    Anwenden (2720) eines Mittelungsfilters auf die Rohdaten, um die Rohdaten zum Erhöhen des Signal-Rausch-Verhältnisses (SNR) von Oberflächen der Vielzahl von Oberflächen zu glätten;
    Durchführen (2730) eines Tiefenberechnungsprozesses an den Rohdaten, wie gefiltert, um Distanzdaten zu erzeugen;
    Erzeugen (2740) einer Punktwolke auf Grundlage der Distanzdaten, der Punktwolke in einem Bezugsrahmen des Sensors;
    Identifizieren (2750) von Basisvektoren für einen Bezugsrahmen der Oberflächen in der Umgebung, wobei ein erster Basisvektor der von dem TOF-Sensor beobachteten Richtung senkrecht zu den Z-Ebenen in der Umgebung entspricht, ein zweiter und dritter Basisvektor jeweils orthogonal zu dem ersten Basisvektor sind, und die Basisvektoren ein "Welt"-Koordinatensystem definieren, d. h. ein Koordinatensystem, in dem die Z-Ebenen horizontal sind, und wobei der erste Basisvektor als der Richtungsvektor definiert ist, der der Richtung des Peaks von Oberflächennormalvektoren über die Punktwolke entspricht; und
    Identifizieren (2760) in der Punktwolke von mindestens einer Z-Ebene, die mindestens eine Oberfläche der Vielzahl von Oberflächen darstellt, wobei eine Z-Ebene eine Ebene in einer realen Umgebung ist, die parallel zu dem Boden in einer bestimmten Umgebung ist.

2. Verfahren nach Anspruch 1, wobei das Identifizieren der mindestens einen Z-Ebene Folgendes einschließt:

Erzeugen (2840) einer Höhenkarte der Punktwolke;
Erzeugen (2850) einer Profildarstellung der Höhenkarte; und
Identifizieren (2860) der mindestens einen Z-Ebene, die jeweils mindestens einem Peak in der Profildarstellung entspricht, wobei jeder Peak des mindestens einen Peaks eine Sammlung benachbarter Punkte in der Punktwolke anzeigt, die dieselbe Schätzung der Oberflächennormalwerte aufweisen, und wobei die Sammlung eine Schwellengröße erreicht.

3. Verfahren nach Anspruch 2, weiter umfassend das Zuordnen einer ersten der mindestens einen Z-Ebenen als Kastenoberseite und einer zweiten der mindestens einen Z-Ebenen als Boden.

4. Verfahren nach Anspruch 3, weiter umfassend:

Berechnen einer Höhe eines Kastens auf Grundlage einer Position der Kastenoberseite in Bezug auf den Boden; und
Berechnen der Länge und Breite des Kastens anhand der Kastenoberseite.

5. Verfahren nach einem der Ansprüche 2 bis 4, weiter umfassend:

Anwenden eines zweiten Mittelungsfilters auf die Rohdaten, wobei der zweite Mittelungsfilter eine kleinere Größe hat als der Mittelungsfilter;
Berechnen der zweiten Schätzungen der Oberflächennormalwerte auf der Grundlage der Rohdaten, wie sie mithilfe des zweiten Mittelungsfilters gefiltert wurden; und
Verfeinern, auf Grundlage der zweiten Schätzungen der Oberflächennormalwerte, welche Punkte in der Sammlung benachbarter Punkte eingeschlossen sind, die durch den mindestens einen Peak angegeben sind, der der mindestens einen Z-Ebene entspricht.

6. Verfahren nach Anspruch 5, wobei das Verfeinern, welche Punkte in der Sammlung benachbarter Punkte enthalten sind, Folgendes einschließt:

Beibehalten des Punktes in der Sammlung benachbarter Punkte, bei dem die zweite Schätzung der Oberflächennormalwerte im Wesentlichen mit dem identifizierten Basisvektor übereinstimmt; und

Verwerfen des Punktes aus der Sammlung benachbarter Punkte, bei denen die zweite Schätzung der Oberflächennormalwerte nicht wesentlich mit dem identifizierten Basisvektor übereinstimmt.

7. Verfahren nach Anspruch 5, wobei das Verfeinern, welche Punkte in der Sammlung benachbarter Punkte enthalten sind, Folgendes einschließt:

Aufrechterhalten eines ersten Punktesatzes in der Sammlung benachbarter Punkte mit einem inneren Produkt aus einer Schätzung der Oberflächennormalwerte der Schätzungen der Oberflächennormalwerte und einer zweiten Schätzung der Oberflächennormalwerte der Schätzungen der zweiten Oberflächennormalwerte innerhalb eines Schwellenwerts von 1; und
Verwerfen eines zweiten Punktesatzes aus der Sammlung benachbarter Punkte mit einem inneren Produkt aus einer Schätzung der Oberflächennormalwerte der Schätzungen Oberflächennormalwerte und einer zweiten Schätzung der Oberflächennormalwerte der Schätzungen der zweiten Oberflächennormalwerte, die nicht innerhalb eines Schwellenwerts von 1 liegen.

8. Verfahren nach Anspruch 5, wobei das Verfeinern, welche Punkte in der Sammlung benachbarter Punkte enthalten sind, das Verwerfen eines zweiten Punktesatzes aus der Sammlung benachbarter Punkte auf der Grundlage der Bestimmung einschließt, dass mindestens ein Teil der Punkte in einer Matrix, die jeden Punkt in dem zweiten Punktesatz umgeben, gesättigt sind, wobei ein Punkt in der Matrix als gesättigt gilt, wenn ein Pixelwert eines Punktes einen Schwellenwert überschreitet.

9. Verfahren nach Anspruch 5, wobei das Verfeinern, welche Punkte in der Sammlung benachbarter Punkte enthalten sind, Folgendes einschließt:

Projizieren, für einen Punkt in der Sammlung benachbarter Punkte, des Punktes auf die mindestens eine Z-Ebene entlang eines zugeordneten Strahls;
Berechnen eines Abstands der Koordinaten des Punktes, der der Projektion entspricht;
Beibehalten des Punktes in der Sammlung benachbarter Punkte, wenn die Entfernung innerhalb einer Schwellenentfernung liegt; und
Verwerfen des Punktes aus der Sammlung benachbarter Punkte, bei denen der Abstand nicht innerhalb des Schwellenabstands liegt.

10. Verfahren nach einem der Ansprüche 5 bis 9, weiter umfassend das Zuordnen eines Punktes in der Punktwolke mit der mindestens einen Z-Ebene auf der Grundlage von Bestimmen, dass eine Höhe des Punktes innerhalb eines Höhenbereichs liegt, der der mindestens einen Z-Ebene zugeordnet ist.

11. Verfahren nach einem der Ansprüche 2 bis 10, weiter umfassend das Durchführen einer Kantenverfeinerung an einem Kantenabschnitt der Sammlung benachbarter Punkte, die bestimmt sind, eine Kante der Z-Ebene darzustellen, das das Bestimmen des Kantenabschnitts der Sammlung benachbarter Punkte einschließt, der eine Kante darstellt, indem verifiziert wird, dass ein Rohwert für den Kantenabschnitt der Sammlung benachbarter Punkte ein Mittelpunktwert für eine Anzahl von Punkten in einer ersten Richtung und die Anzahl von Punkten in einer Richtung gegenüber der ersten Richtung ist.

12. Bildgebungssystem, umfassend:

einen Flugzeit-, TOF, -Sensor, der so eingerichtet ist, dass er Rohdaten erhält, die Abstände zwischen dem TOF-Sensor und einer Vielzahl von Oberflächen in einer Umgebung des TOF-Sensors anzeigen; und
einen Prozessor, der so eingerichtet ist, dass er das Verfahren nach einem der vorhergehenden Ansprüche durchführt.

13. Bildgebungssystem nach Anspruch 12, wobei der TOF-Tiefensensor Folgendes umfasst:

a) eine Lichtquelle zum Beleuchten der Umgebung des TOF-Tiefensensors und einen Bildsensor zum Erfassen von reflektiertem Licht; und/oder
b) einen Bildrahmen, und die Rohdaten sind in einer Vielzahl von Pixeln innerhalb des Bildrahmens angeordnet,
wobei optional ein einzelnes Pixel einen Abstand zu einer der Vielzahl von Oberflächen in der Umgebung des TOF-Tiefensensors umfasst, und das einzelne Pixel eine zugehörige Strahlrichtung aufweist, die eine Richtung von dem TOF-Tiefensensor zu der Oberfläche beschreibt,
und wobei der Prozessor weiter optional, zum Erzeugen der Punktwolke, die Strahlrichtung für das einzelne Pixel mit dem Abstand zu der Vielzahl von Oberflächen für das einzelne Pixel multipliziert.

14. Bildgebungssystem nach Anspruch 12 oder 13, weiter umfassend eine Kamera zum Erfassen eines Bildes der Umgebung des TOF-Tiefensensors und weiter optional umfassend einen Anzeigebildschirm, wobei der Prozessor das von der Kamera erfasste Bild und eine visuelle Anzeige der identifizierten Z-Ebene auf dem Anzeigebildschirm anzeigt.

15. Bildgebungssystem nach einem der Ansprüche 12 bis 14, weiter umfassend einen Lichtsensor zum Erfassen von Sonnenlicht in der Umgebung des TOF-Tiefensensors, wobei der Prozessor den Filter auf die Rohdaten als Reaktion auf das Erfassen mindestens eines Schwellenwerts für Sonnenlicht anwendet.

## Revendications

1. Procédé d'identification de plans Z, comprenant :

l'obtention (2710) de données brutes provenant d'un capteur à temps de vol, TOF, indiquant des distances entre le capteur TOF et une pluralité de surfaces ;
l'application (2720) d'un filtre de calcul de moyenne aux données brutes pour lisser les données brutes pour augmenter le rapport signal/bruit, SNR, de surfaces de la pluralité de surfaces ;
la réalisation (2730) d'un processus de calcul de profondeur sur les données brutes, telles que filtrées, pour générer des données de distance ;
la génération (2740) d'un nuage de points sur la base des données de distance, le nuage de points étant dans un cadre de référence du capteur ;
l'identification (2750) de vecteurs de base pour un cadre de référence des surfaces dans l'environnement, dans lequel un premier vecteur de base correspond à la direction perpendiculaire aux plans Z dans l'environnement observé par le capteur TOF, un deuxième et un troisième vecteurs de base sont chacun orthogonaux au premier vecteur de base, et les vecteurs de base définissent un système de coordonnées « monde », c'est-à-dire un système de coordonnées dans lequel les plans Z sont horizontaux, et dans lequel le premier vecteur de base est défini comme étant le vecteur de direction correspondant à la direction de pic des vecteurs normaux aux surfaces à travers le nuage de points ; et
l'identification (2760), dans le nuage de points, d'au moins un plan Z représentant au moins une surface de la pluralité de surfaces, dans lequel un plan Z est un plan dans un environnement réel qui est parallèle au sol dans un environnement particulier.

2. Procédé selon la revendication 1, dans lequel l'identification de l'au moins un plan Z inclut :

la génération (2840) d'une carte de hauteur du nuage de points ;
la génération (2850) d'une représentation de profil de la carte de hauteur ; et

l'identification (2860) de l'au moins un plan Z correspondant respectivement à au moins un pic dans la représentation de profil, dans lequel chaque pic de l'au moins un pic indique une collection de points adjacents dans le nuage de points présentant une même estimation de normale de surface, et dans lequel la collection atteint une taille seuil.

**3.** Procédé selon la revendication 2, comprenant en outre l'association d'un premier parmi l'au moins un plan Z en tant que sommet de la boîte et d'un second parmi l'au moins un plan Z en tant que sol.

**4.** Procédé selon la revendication 3, comprenant en outre :

le calcul d'une hauteur d'une boîte sur la base d'une position du sommet de la boîte par rapport au sol ; et
le calcul d'une longueur et d'une largeur de la boîte sur la base du sommet de la boîte.

**5.** Procédé selon l'une quelconque des revendications 2 à 4, comprenant en outre :

l'application d'un second filtre de calcul de moyenne aux données brutes, dans lequel le second filtre de calcul de moyenne est d'une taille plus petite que le filtre de calcul de moyenne ;
le calcul de secondes estimations de normales de surface sur la base des données brutes, telles que filtrées en utilisant le second filtre de moyenne ; et
l'affinage, sur la base des secondes estimations de normales de surface, des points inclus dans la collection de points adjacents indiqués par l'au moins un pic correspondant à l'au moins un plan Z.

**6.** Procédé selon la revendication 5, dans lequel l'affinage des points inclus dans la collection de points adjacents inclut :

le maintien du point dans la collection de points adjacents où la seconde estimation de normale de surface est sensiblement alignée avec le vecteur de base identifié ; et
le rejet du point de la collection de points adjacents où la seconde estimation de normale de surface n'est pas sensiblement alignée avec le vecteur de base identifié.

**7.** Procédé selon la revendication 5, dans lequel l'affinage des points inclus dans la collection de points adjacents inclut :

le maintien d'un premier ensemble de points dans la collection de points adjacents présentant un produit interne d'une estimation de normale de surface des estimations de normales de surface et d'une seconde estimation de normale de surface des secondes estimations de normales de surface situé dans un seuil de 1 ; et
le rejet d'un second ensemble de points de la collection de points adjacents présentant un produit interne d'une estimation de normale de surface des estimations de normales de surface et d'une seconde estimation de normale de surface des secondes estimations de normales de surface ne se situant pas dans un seuil de 1.

**8.** Procédé selon la revendication 5, dans lequel l'affinage des points inclus dans la collection de points adjacents inclut le rejet d'un second ensemble de points de la collection de points adjacents sur la base de la détermination qu'au moins une portion de points dans une matrice entourant chaque point dans le second ensemble de points est saturée, où un point dans la matrice est considéré comme saturé lorsqu'une valeur de pixel d'un point dépasse une valeur seuil de pixel.

**9.** Procédé selon la revendication 5, dans lequel l'affinage des points inclus dans la collection de points adjacents inclut :

la projection, pour un point dans la collection de points adjacents, du point vers l'au moins un plan Z le long d'un rayon associé ;
le calcul d'une distance de coordonnées du point correspondant à la projection ;
le maintien du point dans la collection de points adjacents où la distance se trouve à l'intérieur d'une distance seuil ; et
le rejet du point de la collecte de points adjacents où la distance ne se trouve pas dans la distance seuil.

**10.** Procédé selon l'une quelconque des revendications 5 à 9, comprenant en outre l'association d'un point dans le nuage de points avec l'au moins un plan Z sur la base de la détermination qu'une hauteur du point se trouve dans une plage de hauteurs associée à l'au moins un plan Z.

**11.** Procédé selon l'une quelconque des revendications 2 à 10, comprenant en outre la réalisation d'un affinage de bord sur une portion de bord de la collection de points adjacents déterminés pour représenter un bord du plan Z incluant la détermination de la portion de bord de la collection de points adjacents représentant un bord en vérifiant qu'une valeur brute pour la portion de bord de la collection de points adjacents est une valeur médiane pour un nombre de points dans une première direction et le nombre de points dans une direction opposée à la première direction.

12. Système d'imagerie comprenant :

un capteur à temps de vol, TOF, configuré pour obtenir des données brutes indiquant des distances entre le capteur TOF et une pluralité de surfaces dans un environnement du capteur TOF ; et
un processeur configuré pour réaliser le procédé selon l'une quelconque des revendications précédentes.

13. Système d'imagerie selon la revendication 12, dans lequel le capteur TOF de profondeur comprend :

a) une source de lumière pour éclairer l'environnement du capteur TOF de profondeur et un capteur d'image pour détecter la lumière réfléchie ; et/ou
b) une trame d'image, et les données brutes sont agencées en une pluralité de pixels dans la trame d'image,
dans lequel facultativement un pixel individuel comprend une distance jusqu'à l'une de la pluralité de surfaces dans l'environnement du capteur TOF de profondeur, et le pixel individuel présente une direction de rayon associée décrivant une direction du capteur TOF de profondeur vers la surface,
et dans lequel, en outre, facultativement, pour générer le nuage de points, le processeur multiplie la direction du rayon pour le pixel individuel par la distance jusqu'à l'une de la pluralité de surfaces pour le pixel individuel.

14. Système d'imagerie selon la revendication 12 ou la revendication 13, comprenant en outre une caméra pour capturer une image de l'environnement du capteur TOF de profondeur, et comprenant en outre facultativement un écran d'affichage, le processeur affichant, sur l'écran d'affichage, l'image capturée par la caméra et une indication visuelle du plan Z identifié.

15. Système d'imagerie selon l'une quelconque des revendications 12 à 14, comprenant en outre un capteur de lumière pour détecter la lumière solaire dans l'environnement du capteur TOF de profondeur, dans lequel le processeur applique le filtre aux données brutes en réponse à la détection d'au moins un niveau seuil de lumière solaire.

**FIG. 1**

**FIG. 2**

300

| Capture Distance Data | 310 |

| Filter Distance Data | 320 |

| Generate Point Cloud Based on Distance Data | 330 |

| Identify Basis Vectors | 340 |

| Transform Point Cloud to Frame of Reference of Basis Vectors | 350 |

| Identify Z-Planes in Transformed Point Cloud | 360 |

**FIG. 3**

340

| Compute Surface Normals of Point Cloud | 410 |

$\downarrow$

| Bin Coordinates of Surface Normals | 420 |

$\downarrow$

| Identify Peak Coordinates | 430 |

$\downarrow$

| Define First Basis Vector Based on Peak Coordinates | 440 |

$\downarrow$

| Select Second and Third Basis Vectors | 450 |

## FIG. 4

360

| Generate Height Map of Transformed Point Cloud | 510 |

$\downarrow$

| Generate Profile of Height Map | 520 |

$\downarrow$

| Identify Z-Planes as Peaks in Height Map | 530 |

$\downarrow$

| Associate Points in Point Cloud with Z-Planes | 540 |

## FIG. 5

600

| Receive Distance Data Describing Surfaces | ~610 |

↓

| Transform Distance Data into Frame of Reference of a Surface | ~620 |

↓

| Select Box Top and Box Bottom | ~630 |

↓

| Calculate Height from Box Top to Box Bottom | ~640 |

↓

| Calculate Length and Width of Box Top | ~650 |

↓

| Display Box Dimensions | ~660 |

# FIG. 6

630

| | |
|---|---|
| Generate Height Map | 710 |
| Identify Z-Slices in Height Map | 720 |
| Identify Connected Components of Z-Slices | 730 |
| Select Box Top From Candidate Box Tops | 740 |
| Select Surface Box is Resting On | 750 |

**FIG. 7**

650

| | |
|---|---|
| Filter Box Top Data | 810 |
| Extract Points in Box Top | 820 |
| Rotate Extracted Box Top | 830 |
| Calculate Width and Length Profiles | 840 |
| Identify Leading and Trailing Edges in Profiles | 850 |
| Calculate Width and Length Based on Leading and Trailing Edges | 860 |

**FIG. 8**

FIG. 9

FIG. 10

**FIG. 11**

FIG. 12A

FIG. 12B

**FIG. 13**

FIG. 14

940

930

910

920

**FIG. 15**

FIG. 16

**FIG. 17**

z

EP 4 435 468 B1

Connected components in Z =
81.5 cm slice

FIG. 18A

Connected components in Z
= 87.1 cm slice

FIG. 18B

Candidate box top enclosed by convex
hull in Z = 81.5 cm slice

1910a

FIG. 19A

Candidate box top enclosed by
convex hull in Z = 87.1 cm slice

1910b

FIG. 19B

**FIG. 20**

**FIG. 22**

HORIZONTAL AXIS PROJECTION OF BOXTOP
POINTS VERSUS ROTATION ANGLE

PROJECTION DISTANCE ALONG
HORIZONTAL AXIS (METER)

ROTATION ANGLE ABOUT BOXTOP MIDPOINT (DEGREES)

**FIG. 21**

**FIG. 23A**

FIG. 23B

**FIG. 24**

**FIG. 25**

**FIG. 26**

2700

```
┌─────────────────────────────────────────────────────────────┐
│                      Capture Raw Data                        │─2710
└─────────────────────────────────────────────────────────────┘
                              │
                              ▼
┌─────────────────────────────────────────────────────────────┐
│              Apply Averaging Filter(s) to Raw Data           │─2720
└─────────────────────────────────────────────────────────────┘
                              │
                              ▼
┌─────────────────────────────────────────────────────────────┐
│ Perform a Depth Compute Process on the Raw Data, as Filtered,│─2730
│                  to Generate Distance Data                   │
└─────────────────────────────────────────────────────────────┘
                              │
                              ▼
┌─────────────────────────────────────────────────────────────┐
│           Generate Point Cloud Based on Distance Data        │─2740
└─────────────────────────────────────────────────────────────┘
                              │
                              ▼
┌─────────────────────────────────────────────────────────────┐
│ Identify a Basis Vector Representing a Peak Direction Across the│─2750
│                         Point Cloud                          │
└─────────────────────────────────────────────────────────────┘
                              │
                              ▼
┌─────────────────────────────────────────────────────────────┐
│            Identify at least one Z-Plane in the Point Cloud   │─2760
└─────────────────────────────────────────────────────────────┘
```

# FIG. 27

2750

Compute Surface Normals of Point Cloud — 2810

Bin Coordinates of Surface Normals Including Averaging Neighboring Bins — 2820

Identify Peak Surface Normal Vector — 2830

Generate Height Map of Point Cloud — 2840

Generate Profile Representation of Height Map — 2850

Identify at least one Z-Plane as a at least one Peak in Height Map — 2860

Associate Points in Point Cloud with the at least one Z-Plane — 2870

## FIG. 28

2900

| | |
|---|---|
| Receive Raw Data Describing Surfaces | 2910 |
| Identify Z-Planes in the Raw Data | 2920 |
| Select Box Top and Box Bottom | 2930 |
| Calculate Height from Box Top to Box Bottom | 2940 |
| Calculate Length and Width of Box Top | 2950 |
| Display Box Dimensions | 2960 |

**FIG. 29**

2930

| Generate Height Map | 3010 |

| Identify Z-Slices in Height Map | 3020 |

| Identify Connected Components of Z-Slices | 3030 |

| Select Box Top From Candidate Box Tops | 3040 |

| Identify Surface Box is Resting On | 3050 |

## FIG. 30

2950

| Refine Z-plane Data | 3110 |

| Perform Edge Refinement | 3120 |

| Extract Points in Z-plane | 3130 |

| Rotate Extracted Z-plane | 3140 |

| Calculate Width and Length Profiles | 3150 |

| Identify Leading and Trailing Edges in Profiles | 3160 |

| Calculate Width and Length Based on Leading and Trailing Edges | 3170 |

## FIG. 31

3110

| Maintain or Discard a Pixel based on Whether the Second Surface Normal Estimate is Substantially Aligned with the Identified Basis Vector | 3210 |
| Maintain or Discard a Pixel based on an Inner Product of a First Surface Normal Estimate and a Second Surface Normal Estimate | 3220 |
| Compute a Distance of Coordinates of a Pixel Projected to the Z-plane Along an Associated Ray onto the Z-plane | 3230 |
| Maintain or Discard a Pixel based on Comparing the Distance to a Threshold | 3240 |
| Maintain or Discard a Pixel based on Determining Whether at least a Portion of Pixels in a Square Surrounding the Pixel are Saturated | 3250 |

# FIG. 32

**EP 4 435 468 B1**

## REFERENCES CITED IN THE DESCRIPTION

**Patent documents cited in the description**

- US 2021051238 W
- US 63081742

- US 63081775 B